# EUROPEAN PATENT SPECIFICATION

(11) **EP 3 201 879 B1**
(45) Date of publication and mention of the grant of the patent: **11.07.2018**
(21) Application number: 15781218.1
(22) Date of filing: 28.09.2015
(51) Int. Cl.: G06T 11/60, G06T 3/40, G06T 11/00

(54) **OPTIMIZING THE LEGIBILITY OF DISPLAYED TEXT**
OPTIMIERUNG DER LESBARKEIT VON ANGEZEIGTEM TEXT
OPTIMISATION DE LA LISIBILITÉ D'UN TEXTE AFFICHÉ

(30) Priority: 30.09.2014 US 201414503207
(43) Date of publication of application: 09.08.2017
(73) Proprietor: Microsoft Technology Licensing, LLC, Redmond, WA 98052-6399 (US)
(72) Inventor: TUMANOV, Ilya, Redmond, Washington 98052-6399 (US); FAROUKI, Karim, Redmond, Washington 98052-6399 (US); LEE, David Benjamin, Redmond, Washington 98052-6399 (US); FREIER, Nathaniel George, Redmond, Washington 98052-6399 (US); HOLLASCH, Steven Richard, Redmond, Washington 98052-6399 (US)
(74) Representative: Grünecker Patent- und Rechtsanwälte PartG mbB
(86) International application number: PCT/US2015/052540
(87) International publication number: WO 2016/053820

(56) References cited:
- EP-A1- 1 555 634
- US-A1- 2002 113 801
- US-A1- 2006 044 324
- US-A1- 2007 257 929
- US-A1- 2014 281 847

## Description

### BACKGROUND

The availability and diversity of software that can be used to create content has increased. Similarly, software applications used for editing image files and video files has contributed to advances in the sharing of media by allowing users to supplement images with text and other design additions. For instance, some software applications allow users to superimpose text on top of an image. When using such applications, users may be tasked with the challenge of creating arrangements that optimize the aesthetics and legibility of the text. Such tasks generally require a manual editing process, which may be inefficient and cumbersome.

Because almost any technology user today creates, generates, shares, and/or publishes content, some users or other entities creating, generating, sharing, or publishing the content may not be trained in design principles. As a result, some users or entities may not be capable of producing visual content that is designed for optimal legibility. Regardless of the level of training, it may be even more difficult to produce visual content that is legible and aesthetically pleasing.

It is with respect to these and other considerations that the disclosure made herein is presented.

EP 1 555 634 A1 relates to techniques for automatically determining an image foreground color. A foreground color for a digital image is automatically determined by dividing the colors of the pixels of at least a part of the digital image into a number of color clusters in a color space and for at least one cluster selecting a color being related to the at least one color cluster according to predetermined criteria.

### SUMMARY

It is the object of the present invention to improve the efficiency of prior art systems.

This object is solved by the subject matter of the independent claims.

Preferred embodiments are defined by the dependent claims.

Technologies are described herein for optimizing aesthetics and legibility of displayed text. Input data may define an approach, model or theme for presenting text in a two-dimensional ("2D") or a three-dimensional ("3D") display environment. The input data may be analyzed to determine a legibility score for the text. The legibility score may be based on a number of factors including, but not limited to, the characteristics of the text, characteristics of the display environment, a treatment preference, an aggregate contrast ratio derived from aggregate luminance values, other contextual information and/or combinations thereof.

If the legibility score for the text does not meet at least one threshold, one or more treatments may be applied to the input data. For example, and without limitation, treatments may include a modification of the text size, font, text position, text color and/or other modifications to the display environment (e.g., an image), to improve the legibility of the text and/or the overall aesthetics of text and the display environment. The resulting output produced by the application of a treatment to the input data may be in the form of a model defining parameters of the modifications.

Techniques described herein may also determine a legibility score for the generated model. One or more models may be filtered, ranked and presented to an interface depending on the legibility score of the models.

It should be appreciated that the above-described subject matter may be implemented as a computer-controlled apparatus, a computer process, a computing system, or as an article of manufacture such as a computer-readable storage medium. These and various other features will be apparent from a reading of the following Detailed Description and a review of the associated drawings.

This Summary is provided to introduce a selection of concepts in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIGURE 1 is a block diagram showing several example components of a system for optimizing the aesthetics and/or legibility of displayed text.
FIGURE 2A is a flow diagram illustrating aspects of a method for optimizing aesthetics and/or legibility of displayed text.
FIGURE 2B is a flow diagram illustrating aspects of a method for determining an aggregate contrast ratio.
FIGURE 3 illustrates an example showing how text and an image of input data are combined to form a transformation of the input data.
FIGURE 4A illustrates an example array of super pixels aligned with a representative section of a transformation of the input data.
FIGURE 4B illustrates an individual super pixel of the array of super pixels shown in FIGURE 4A.
FIGURE 4C illustrates another individual super pixel of the array of super pixels shown in FIGURE 4A.
FIGURE 4D illustrates another example of super pixels aligned with a representative section of a transformation of the input data.
FIGURE 4E illustrates an individual super pixel of the super pixels shown in FIGURE 4D.
FIGURE 4F illustrates another individual super pixel of super pixels shown in FIGURE 4D.
FIGURE 5A illustrates a sample transformation generated from a model resulting from a global treatment.
FIGURE 5B illustrates a sample transformation generated from a model resulting from a treatment involving a backdrop.
FIGURE 5C illustrates a sample transformation that is generated from a model resulting from a treatment involving a modification to the text.
FIGURE 5D illustrates a sample transformation that is generated from a model resulting from a treatment involving more than one modification to the text.
FIGURE 5E illustrates a sample transformation that is generated from a model resulting from a treatment involving a modification to the text.
FIGURES 6A-6D illustrate example transformations with highlights showing salient regions and invariant regions.
FIGURE 7 illustrates a sample transformation that may be used with a process to yield more than one aggregate contrast ratio.
FIGURE 8 is a computer architecture diagram illustrating an illustrative computer hardware and software architecture for a computing system capable of implementing aspects of the techniques and technologies presented herein.
FIGURE 9 is a diagram illustrating a distributed computing environment capable of implementing aspects of the techniques and technologies presented herein.
FIGURE 10 is a computer architecture diagram illustrating a computing device architecture for a computing device capable of implementing aspects of the techniques and technologies presented herein.

### DETAILED DESCRIPTION

The following detailed description is directed to concepts and technologies for optimizing aesthetics and/or legibility of displayed text. Generally described, techniques disclosed herein may obtain input data that includes an image and data defining text that is configured to be superimposed over the image. The input data may be analyzed to compute a legibility score associated with the text. As will be described in more detail below, the legibility score may be based on a number of factors including, but not limited to, the characteristics of the text, characteristics of the image, a treatment preference, an aggregate contrast ratio derived from aggregate luminance values, a relative importance of legibility, other contextual information and/or combinations thereof. If the legibility score does not meet at least one threshold, one or more treatments may be applied to the input data.

Generally described, a treatment may be a process, technique or data used to modify text, an image or any data that modifies a relationship between the text and the image of the input data. For instance, a treatment may include a modification of the text size, font, text position, text color and/or any data defining how the text appears in relation to the image. A treatment may also include modifications to the image to improve the legibility of the text and/or the overall aesthetics of a transformation or rending showing the text and the image. The resulting output produced by the application of a treatment to the input data may be in the form of a model. Techniques described herein may also determine a legibility score for the generated models. One or more models may be filtered, ranked and presented to a user based on the legibility score of the one or more models.

In some configurations, the aggregate contrast ratio may be based on an aggregate luminance value associated with the text and an aggregate luminance value associated with the image. The aggregate luminance values may be measured from one or more defined sample areas in the text and the image. For illustrative purposes, a defined area is referred to herein as a "super pixel." In general, the size of the super pixel may be based on one or more factors including the thickness of one or more characters, e.g., thickness of the strokes or lines of a character, the height of one or more characters, the point size and/or other aspects of the input data. As will be described in more detail below, by selecting an appropriate size for the super pixel, accurate legibility scores may be achieved while mitigating the need for demanding computational resources.

Briefly described, the one or more treatments applied to the input data may include one or more operations that include modifying the brightness, size, color and/or other aspects of the text and/or the image. Among several non-limiting examples, a treatment may also include the generation of a backdrop positioned behind the text, and in front of the image, to increase the contrast between the text and the image. It can be appreciated that partial transparency may be applied to the backdrop. A treatment may also include the identification of salient regions and invariant regions within the image. In such a treatment, the text may be repositioned based on the location of the salient regions and/or the invariant regions. A treatment may also include a modification of the image which, for example, may include increasing or decreasing the brightness of the image and/or modifying the color of the image. As will be described in more detail below, a treatment may include any type of modification to the text and/or the display environment.

The resulting output produced by the application of a treatment to the input data may be in the form of a model, also referred to herein as "model data." In one example, when a treatment is applied to input data, the resulting model may include data defining the text, such as ASCII values for the characters, a font, font size, and/or other data describing how the text may be arranged, such as the text position. The model data may also include image data and/or data indicating modifications, such as a brightness adjustment, to the image. Model data may also be generated even if no treatment is applied to the input data. In such an example, model data may be generated when a treatment adds text to supplement the input data.

As will be described in more detail below, the model data is configured to provide one form of output without the need to render the treated input data. In some implementations, the model may be communicated to one or more computing devices consuming the input data, and the consuming computing device may render an output of the input data based on the model. In other implementations, techniques described herein may also process the model data to render one or more output files. In any configuration, the model data may be used to improve the legibility of text that is displayed in an image, video or any other display environment, including 2D or 3D environments.

In some configurations, a legibility score may be determined for the model data. The legibility score for the model data may be based on a number of factors including, but not limited to, the characteristics of the text, characteristics of the image, an intended use of the text, an aggregate contrast ratio derived from aggregate luminance values, a relative importance of legibility, other contextual information and/or combinations thereof.

The legibility score for the model data may be compared against one or more thresholds. Some examples of data that may be used as a threshold may include: the legibility score associated with the input data; the legibility score of other models; and/or a predetermined threshold. If the legibility score for a particular model meets at least one threshold or an aggregation of thresholds, the model may be stored and used as an output. In some configurations, a predetermined number of models are generated and ranked based on the legibility score. As will be described in more detail below, a threshold can be different depending on the circumstances and the desired legibility. For instance, a thumbnail generated from an image and text might only be intended to provide a 'hint' that the image contains text, or it could be intended to be fully readable. In each case, as illustrated in the examples below, the threshold for legibility may vary.

In some configurations, techniques described herein obtain and process feedback on the generated models. For example, an interface may be configured to obtain feedback from a user or a computer. The feedback may indicate a selection of a treatment or model, or the feedback may communicate data indicating an evaluation of a treatment or model. The feedback may also be used for machine learning purposes. For instance, techniques described herein may store and process the feedback to allow processes disclosed herein to benefit from historical usage data.

Further, it can be appreciated that the example treatments are provided for illustrative purposes and are not to be construed as limiting. As it can be appreciated, any information, paradigm, process or data structure from any resource may be used with techniques described herein to process input data. In addition, although the techniques described herein refer to the processing of an "image" or "image data," it is to be appreciated that an "image" may be a part of any form of media, such as a video, still image, or any other form of data defining a 2D or 3D display environment. For instance, the image may be a still image, frame of a video, or a perspective of a 2D or 3D display environment.

While the subject matter described herein is presented in the general context of program modules that execute in conjunction with the execution of an operating system and application programs on a computer system, those skilled in the art will recognize that other implementations may be performed in combination with other types of program modules. Generally, program modules include routines, programs, components, data structures, and other types of structures that perform particular tasks or implement particular abstract data types. Moreover, those skilled in the art will appreciate that the subject matter described herein may be practiced with other computer system configurations, including hand-held devices, multiprocessor systems, microprocessor-based or programmable consumer electronics, minicomputers, mainframe computers, and the like.

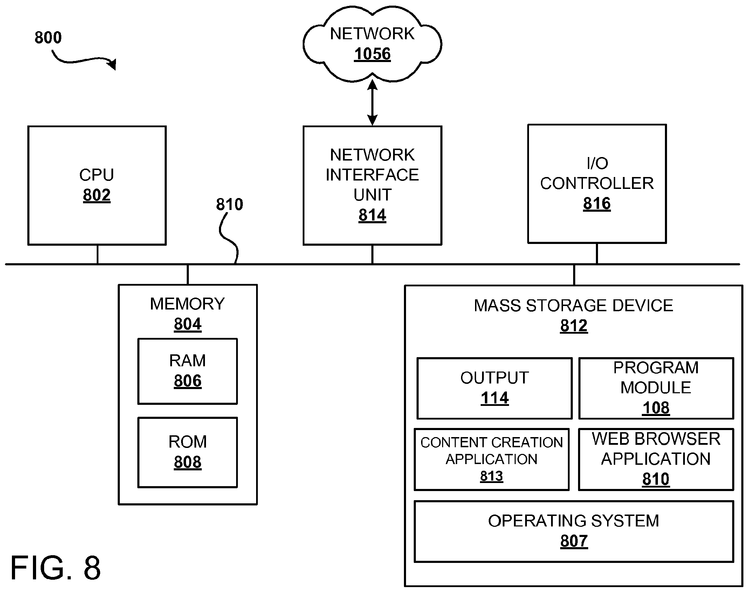

In the following detailed description, references are made to the accompanying drawings that form a part hereof, and in which are shown by way of illustration specific configurations or examples. Referring now to the drawings, in which like numerals represent like elements throughout the several figures, aspects of a computing system, computer-readable storage medium, and computer-implemented methodologies for optimizing aesthetics and/or legibility of displayed text. As will be described in more detail below with respect to FIGURES 8-10, there are a number of applications and services that can embody the functionality and techniques described herein.

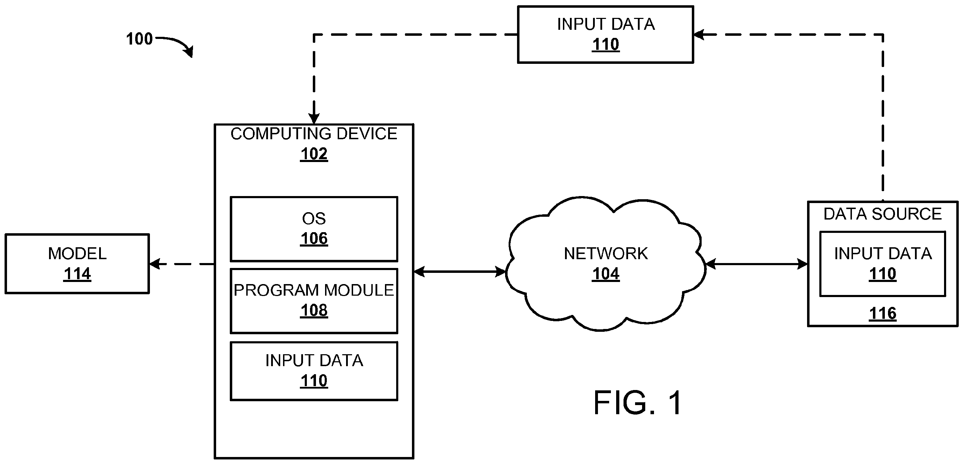

Referring now to FIGURE 1, aspects of one operating environment 100 for the various configurations presented herein will be described. The operating environment 100 shown in FIGURE 1 can include a computing device 102. According to various configurations, the functionality of the computing device 102 can be provided by a personal computer ("PC") such as a desktop, tablet, workstation, or laptop computer system. The functionality of the computing device 102 also can be provided by other types of computing systems including, but not limited to, server computers, handheld computers, netbook computers, notebook computers, embedded computer systems, personal digital assistants, mobile telephones, tablet or slate computers, smart phones, or other devices or systems capable of executing the various software elements described herein. Because other computing systems can be used to provide the functionality described herein, the above examples of the computing device 102 should be understood as being illustrative and should not be construed as being limiting in any way.

According to some configurations, the computing device 102 is configured to operate in communication with, or as a part of, a communications network ("network") 104. In some other configurations, the computing device 102 does not operate in communication with the network 104 and/or the functionality of the computing device 102 described herein can be provided without accessing the network 104. The computing device 102 can be configured to execute an operating system 106 and one or more application programs, modules, software elements, or other computer-executable or computer-executable instructions such as, for example, a program module 108 and/or other computer-executable instructions.

The operating system 106 is a computer program for controlling the operation of the computing device 102. The program module 108 can include an executable program configured to execute on top of the operating system 106 to provide the functionality described herein for optimizing aesthetics and/or legibility of text in an image. Although the program module 108 is illustrated as a component of the computing device 102, it should be understood that the program module 108 might be embodied as or in a stand-alone device or components thereof operating as part of or in communication with the network 104 and/or the computing device 102. The program module 108 also can be a virtualized service or technology layer that executes on the computing device 102 and/or on other real or virtual devices in communication with the computing device 102. Thus, the configuration shown in FIGURE 1 is illustrative and should not be construed as being limiting in any way.

As will be explained in more detail below, the program module 108 can be configured to obtain and process input data 110. The input data 110 obtained by the program module 108 can include visual content such as one or more images, videos, or the like, as well as other content such as text to be presented with the visual content. As can be appreciated, the input data 110 may also include data that defines 3D models, which may include maps, virtual environments, an augmented reality environment and/or multidimensional objects. For purposes of illustrating and describing the concepts and technologies disclosed herein, the visual content is referred to herein as an "image."

In addition, text and/or other graphical objects that are positioned over, superimposed and/or overlaid on an image or other form of media, may be defined by the input data 110 in any suitable format. For instance, the text and other graphical objects may be defined by data describing information such as a font, point size, text position, stroke or line thickness, layout or other information used to describe text, symbols and/or markings that are to be positioned over one or more images. Because a number of types of visual content are contemplated and possible, it should be understood that the described implementations are illustrative and should not be construed as being limiting in any way.

As will be described in more detail below, the program module 108 may be configured to perform a number of operations that may obtain, analyze, modify and store data defining a display environment, such as an image, video and/or any other data format where text and other symbols may be presented. It is to be appreciated that the techniques described herein may be applied to any data defining any image, video or 3D environment where text may be arranged and/or displayed.

According to various configurations, the computing device 102 can be configured to obtain, create, generate, receive, and/or store the input data 110. For example, the input data 110 can be stored at the computing device 102 in a memory device, disk drive, or other data storage elements. In some other configurations, such as the configuration illustrated in FIGURE 1, the input data 110 can be obtained from a data source 116 that can be configured to operate as part of or in communication with the network 104. The functionality of the data source 116 can be provided by a network drive, a server computer operating on or in communication with the network 104, a database or other real or virtual data storage elements, and/or other data storage devices.

As described in detail below, the input data 110 or other data obtained by the computing device 102 may be processed to generate a legibility score associated with the text represented in the input data 110. The legibility score may be used to determine if one or more treatments should be applied to the input data 110. As will be described in more detail below, one or more program modules, such as the program module 108, may apply one or more treatments to the input data 110 to create a model 114 that represents one or more modifications that may improve the legibility of the text represented in the input data 110. In one example, when a treatment is applied to the input data 110, the resulting model 114 may include data defining the text, such as ASCII values for the characters, a font, font size, and/or other data describing how the text may be arranged, such as the text positon. The resulting model 114 may also define one or more modifications to the image and/or image data. Additional details regarding this process will be provided below.

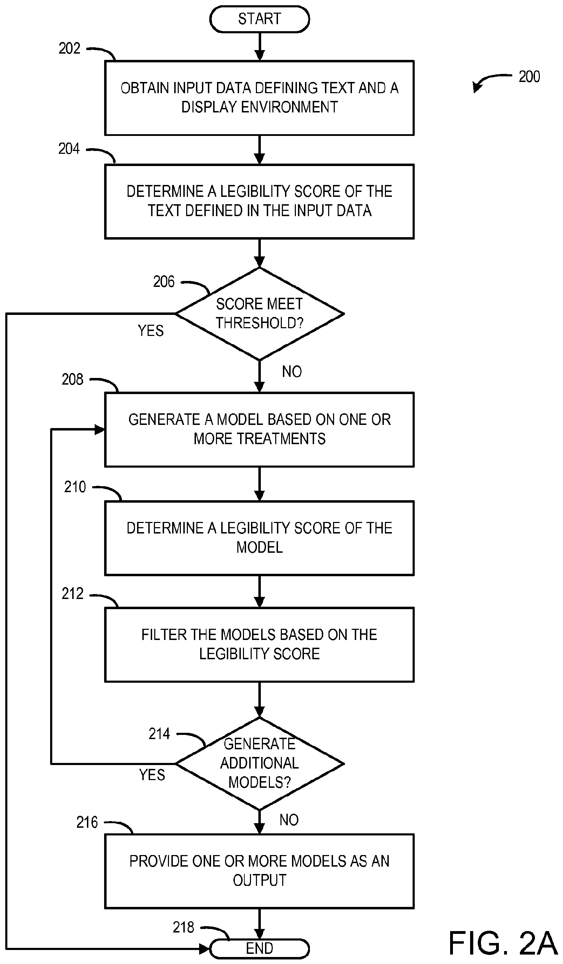

Turning now to FIGURE 2A, aspects of a routine 200 for optimizing aesthetics and/or legibility of displayed text are shown and described below. It should be understood that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, and/or performed simultaneously, without departing from the scope of the appended claims.

It also should be understood that the illustrated method can be ended at any time and need not be performed in its entirety. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

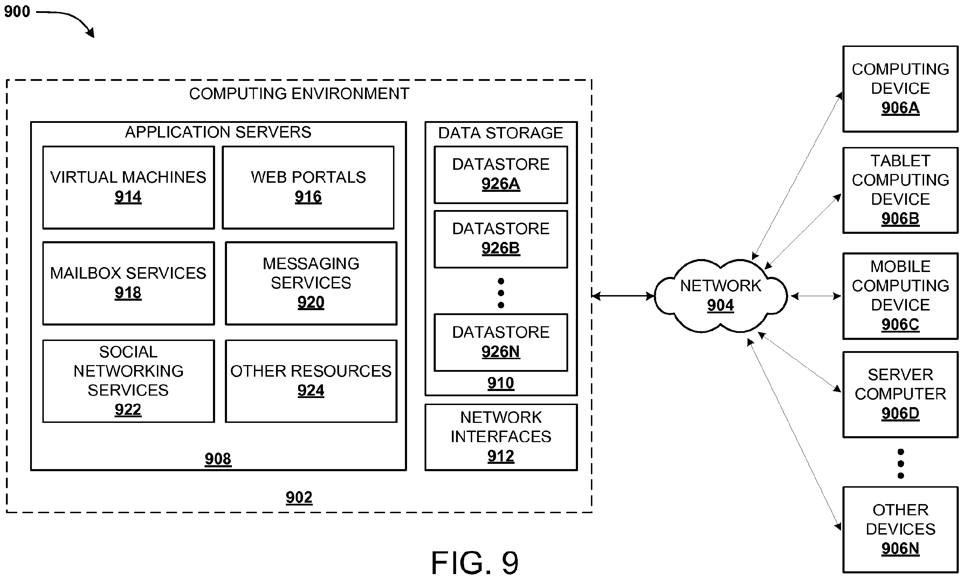

As will be described in more detail below, in conjunction with FIGURES 8-10, the operations of the routine 200 are described herein as being implemented, at least in part, by an application, such as the program module 108. Although the following illustration refers to the program module 108, it can be appreciated that the operations of the routine 200 may be also implemented in many other ways. For example, the routine 200 may be implemented, at least in part, by a content creation application 813 of FIGURE 8 or any other application, such as a web browser application 810 of FIGURE 8. In addition, one or more of the operations of the routine 200 may alternatively or additionally be implemented, at least in part, by a web browser application 810 of FIGURE 8 or another application working in conjunction with one or more servers, such as one or more an application servers 908 of FIGURE 9.

With reference to FIGURE 2A, the routine 200 begins at operation 202, where the program module 108 obtains the input data 110. As summarized above, the input data 110 may define an approach, model or theme for presenting text in a 2D or a 3D display environment. For example, the input data 110 may include an image, which for illustrative purposes is also referred to herein as a "display environment," and data defining text or objects that may be displayed with the image or superimposed over the image. Input data 110 may include any type of data, such as video data, static image data, a 3D model, data modeling an augmented reality environment and/or combinations thereof. As summarized above, some examples described herein involve the processing of image data or the processing of an "image." It can be appreciated that such examples are provided for illustrative purposes and techniques disclosed herein may be applied to any other form of data that involves the display of text with any form of media or display environment.

In some configurations, input data 110 defining text may include a font, point size, text position, layout or other information used to describe text, symbols and/or markings that are displayed over or displayed within a display environment. Although some examples described herein refer to text that is displayed over an image, techniques described herein may also apply to the display of any object, text symbol or other graphical object displayed with, positioned over or superimposed over a surface or other object of a display environment. For example, a title superimposed over a picture or video, or text appearing in a 3D virtual environment. In addition, techniques described herein may also apply to the display of text that is partially visible behind a semitransparent image. As can be appreciated, the techniques for applying one or more treatments may apply to the text or image regardless of the order of the layering.

Because the techniques disclosed herein involve a number of types of graphical objects that are presented in many types of display environments, it should be understood that the described implementations are illustrative and should not be construed as being limiting in any way. In addition, as can be appreciated, the input data 110 may be generated by the computing device 102 or the input data 110 may be received from another module or computer. For example, the input data 110 may be produced by one or more modules for cropping images and arranging layouts.

Next, at operation 204, the program module 108 determines a legibility score associated with the input data 110. Generally described, the legibility score associated with the input data 110 indicates the legibility of the text as the text is arranged and positioned relative to the image. As can be appreciated, since the input data may separately provide image data and data defining the text, techniques for determining the legibility score of the input data 110 may be based on a generated "output" (also referred to as a "transformation") that is generated by a transformation or rendering of the image data and data defining the text. The legibility score determined in operation 204 might also be referred to herein as an "input legibility score" or a "legibility score of the input data."

As summarized above, the legibility score may be based on any number of factors related to the input data 110 and other contextual data. In some non-limiting examples, the legibility score may be based on the characteristics of the text, characteristics of the image, a treatment preference, an aggregate contrast ratio derived from aggregate luminance values, other contextual information from one or more resources and/or combinations thereof. As will be described in more detail below, individual factors or different combinations of factors may be utilized to determine the legibility score.

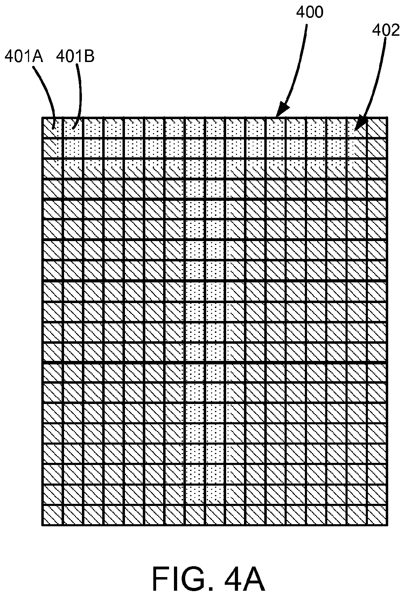

In one example of operation 204, the legibility score may be based on, at least in part, an aggregate contrast ratio. As summarized above, an aggregate contrast ratio may be based on an aggregate luminance value associated with the text and an aggregate luminance value associated with the image. The aggregate luminance values may be measured from one or more defined sample areas of the text and the image. As will be described in more detail below, the aggregate luminance values may be processed in a number of different ways to determine the aggregate contrast ratio. Additional details and examples regarding the determination of the aggregate contrast ratio and the aggregate luminance values are provided below and shown in FIGURES 4A-4F.

In other examples of operation 204, the legibility score may be based on, at least in part, the characteristics of the text. For example, the legibility score may be based on the font, color, stroke or line thickness, size and other display characteristics of the text. Data describing such characteristics of the text may be processed in conjunction with the aggregate contrast ratio and/or other factors. Additional details and examples regarding the legibility score and the characteristics of the text are provided below.

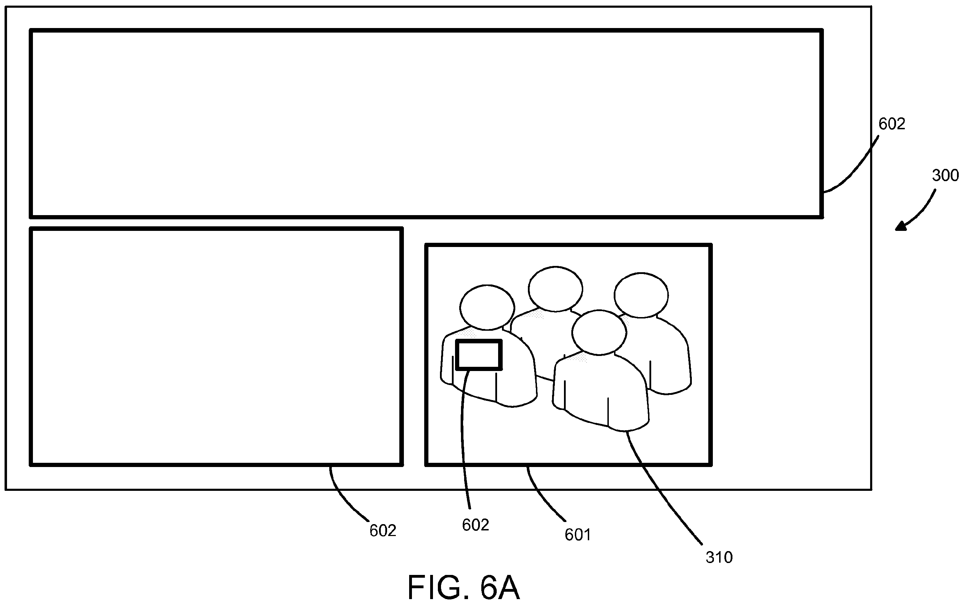

In yet other examples of operation 204, the legibility score may be based on, at least in part, the location of the text relative to salient regions and invariant regions within the image. For instance, if text is positioned over a salient region, which may include a face, the legibility score may be adjusted depending on the desired result. Similarly, if text is positioned over an invariant region within an image, such as a blank space, the legibility score may be adjusted depending on the desired result. As will be described in more detail below, the location of the text relative to salient regions and invariant regions within the image may also influence one or more thresholds utilized by techniques disclosed herein. Additional details and examples regarding the salient regions and invariant regions are provided below and shown in FIGURES 6A-6D.

As can be appreciated, these example factors are provided for illustrative purposes. It can be appreciated further that many other factors may influence the legibility score. For instance, data defining an intended use, data defining device capabilities, accessibility requirements, geolocation information, copyright information and/or contextual information may be used to influence the legibility score. In addition, any combination of factors may be applied to operation 204 depending on the desired result. In addition, individual scores of each factor may be normalized and weighted in the process of determining the legibility score. Illustrative examples involving operation 204 are provided below.

Once the program module 108 determines the legibility score associated with input data, the routine 200 proceeds to operation 206 where the program module 108 determines if the legibility score associated with the input data 110 meets one or more thresholds. In some configurations, the program module 108 may access data defining one or more pre-determined thresholds. The thresholds may also include generated data, such a previously generated legibility score.

As will be appreciated, a threshold and/or a legibility score may be influenced by a number of factors. For instance, the threshold or the legibility score may be based, at least in part, on data defining an intended use, data defining device capabilities, accessibility requirements, and/or contextual information describing a source, resource, author, consumer or other data related to the input data. For example, an accessibility requirement may influence the threshold to be at a higher level so the legibility of the text meets one or more accessibility standards. In another example, device capabilities indicating small display screens may influence the threshold to be at a higher level. In other examples, data stored in a user profile or stored in another resource may indicate that an author or consumer of the content has a need for a higher or lower threshold. In one illustrative example, if a consumer of the content is associated with a profile defining accessibility requirements, that user may be associated with an elevated threshold. In another illustrative example, if an author of the content is marketing content focused on image quality, e.g., a photographer, that user may be associated with a reduced threshold.

In operation 206, legibility score of the input data is compared with the one or more thresholds. If it is determined that the legibility score of the input data meets the one or more thresholds, the routine 200 may proceed to operation 218 where the routine 200 terminates. Such a result may indicate that the legibility of the text defined in the input data 110 may be suitable.

In operation 206, if it is determined that the legibility score does not meet at least one threshold, the routine 200 proceeds to operation 208 where the program module 108 applies one or more treatments to the input data 110 to generate model data. As summarized above, a treatment may involve a modification of the input data to improve the legibility of the text. For example, one or more treatments applied to the input data may include a modification of the brightness, size, color or other aspects of the text and/or the image. In another example, a treatment may also include the generation of an opaque or translucent backdrop positioned behind the text to increase the contrast between the text and the image. In yet another example, a treatment may also include a drop shadow around the text to bring focus to the text and/or increase the contrast ratio between the text and the image. In other examples, a treatment may involve the generation of a frame or border around the text or portions of the text.

In some implementations of operation 206, a treatment may also include the identification of salient regions and invariant regions within the display environment. As used herein, the term "salient region" can be used to refer to a portion of an image that includes what can be considered to be an "important" portion of the image. For example, if an image includes people, the salient region can be determined to include one or more faces of the people in the image. Similarly, the salient region can be identified as buildings in architectural photos, flowers or other vividly colored items among trees, grass, or other relatively monotonously-colored backgrounds, or the like. In some configurations, the salient region can be identified by the computing device based upon patterns, color variances, sharpness or blurring, facial recognition, or other processes. In some configurations, salient regions may be defined by a user.

The term "invariant region" as used herein can be used to refer to an area, region, or portion of the image that has a relatively consistent color, color scheme, color differences, luminance, sharpness, blur, pattern, or the like, that can be determined to be a location at which text included in the data could be located with respect to the image over the invariant region, achieving reasonable and consistent contrast between the foreground text and the background image. In some examples, the invariant region can correspond to a relatively uniform portion of the image such as a blue sky in a landscape photograph, a wall or other background behind human subjects, or the like. Salient regions and invariant regions may or may not be mutually exclusive. For example, in some cases invariant regions can be contained within the salient regions or can overlap the salient regions.

The text may be repositioned based on the location of the salient and invariant regions. In one illustrative example, if an image includes a face, the region around the face may be identified as a salient region. If the input data 110 included text that is positioned in the salient region, operation 208 may apply a treatment that moves the text from the salient region to an invariant region.

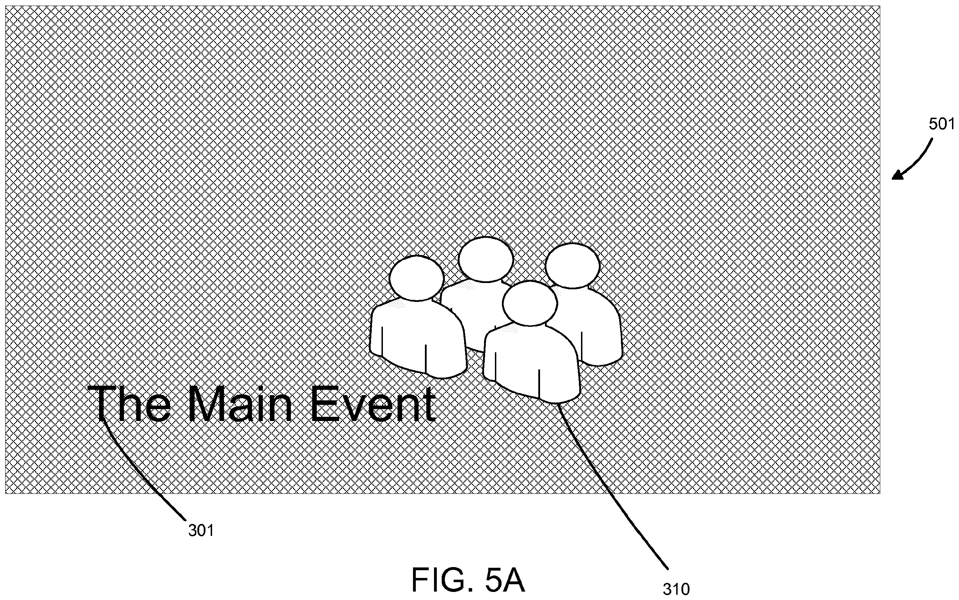

In another example, a treatment may also include a modification of the image, which, for example, may include zooming or panning of an image or video. As will be described in more detail below, a treatment may include any type of modification to the text and/or the display environment. Additional examples of individual and combinations of treatments are described below and shown in FIGURES 5A-5E.

In operation 208, when one or more treatments are applied to the input data 110, the program module 108 may generate a model 114. The model 114 may be any data structure configured to store data representing the one or more modifications to the input data 110. The output of operation 208 may also be referred to herein as "model data" or an "intermediate model." In one example, the model 114 may include data defining the text, such as ASCII values for the characters, a font, font size, and other data describing how the text may be arranged, such as the text positon. The model 114 may also include data representing modifications to the image. For instance, the model 114 may include parameters for brightening the image or modifying one or more colors.

In some configurations, the model 114 may not include a rendering of the text or the image. To mitigate the use of computational resources, for example, the model 114 may be configured to store data representing the characteristics of text and/or characteristics of one or more modifications to the image. Techniques described herein may also utilize model data, in some implementations, to generate a rendered file or a transformation of the model. One or more renderings, which may be stored in any type of data structure or file, may be used to display text and the display environment, such as rendered text superimposed over an image, video or a display environment involving a 3D model.

Next, the routine 200 proceeds to operation 210 where the program module 108 determines a legibility score for the model 114. Generally described, the determination of the legibility score for the model 114 may involve any number of factors, such as those described above with respect to operation 204. For instance, if the model 114 defines text to be superimposed over an image or video, the legibility score may be based on the data defining the text, characteristics of the image, interpreted contextual information and/or other information such as an aggregate contrast ratio. Additional examples and factors for determining a legibility score for the model 114 are provided below. These techniques are not limited to the current disclosure as any technique that analyzes text and image data may be used to determine a legibility score for the model 114 or a model of other data.

Once the program module 108 determines the legibility score associated with the model 114, the routine 200 proceeds to operation 212 where the program module 108 filters the model based on the legibility score of the model and one or more thresholds. Generally described, operation 212 processes the legibility score for the model 114 and compares it to one or more thresholds. If the legibility score for the model 114 meets the one or more thresholds, the model 114 is selected for additional processing. If the legibility score for the model 114 does not meet the one or more thresholds, the model 114 is discarded or marked for deletion.

As can be appreciated, the threshold used in operation 212 may be similar to the threshold of operation 206, where the threshold may be a pre-determined value, also referred to herein as a "pre-determined threshold." The pre-determined threshold may be based on one or more configuration settings. This type of configuration provides a filter that may be manually or programmatically adjusted to a desired standard of legibility. In some configurations, the threshold may be based, at least in part, on the legibility score associated with the input data 110. This type of configuration allows operation 212 to process models that have a higher legibility score than the legibility score of the input data.

In yet another configuration, operation 212 may utilize an aggregate threshold based on multiple thresholds, such as the predetermined threshold, the legibility score of other models and the legibility score of the input data. In such configurations, the lower threshold or the higher threshold may be used as the aggregate threshold. In other examples, the predetermined threshold, the legibility score of other models and the legibility score of the input data may be aggregated in other ways, e.g., two or more values may be averaged to determine the aggregate threshold. In yet other examples, two or more values may be aggregated in other ways, some techniques of which may include a weighted average, statistical variance, or any other computation for aggregating two or more values.

Once the program module 108 performs the filtering process of operation 212, the routine 200 proceeds to operation 214 where the program module 108 determines if additional models are needed. In some configurations, the program module 108 may be configured to loop through operations 208-214 and exit to operation 216 when one or more conditions are met. For example, routine 200 may iterate through operations 208-214 until the routine 200 has produced a predetermined number of models 114 having a legibility score above one or more thresholds.

In some configurations, as the routine 200 iterates through operations 208-214, a number of different treatments or combinations of treatments may be applied. The type of treatment applied in each iteration may be based on a fixed list of treatments. For instance, in a first iteration, the program module 108 may first apply a global modification to the image of the input data 110. In such a treatment, the brightness of the image may be adjusted. In the second iteration, for example, the text of the input data may be repositioned. In a third iteration, the font size and the color of the text may be modified. As can be appreciated, these examples are provided for illustrative purposes, as any set list of treatments may be used with techniques disclosed herein.

Returning to operation 214, if the program module 108 determines that additional models are not needed, the routine 200 proceeds to operation 216 where one or more models are provided as an output. In some configurations, operation 216 may rank the models based on the legibility score and present one or more models based on the ranking. Operation 216 may involve the communication and/or the display of the one or more models. For example, the program module 108 may render and display one or more models 114 on a display device. As can be appreciated, the output generated in operation 216 may involve the communication of the model 114 to one or more software modules, such as an authoring tool, or different computing devices. It can also be appreciated that operation 214 may save model data to a storage device. Once one or more models have been processed by operation 216, the routine 200 terminates at operation 218.

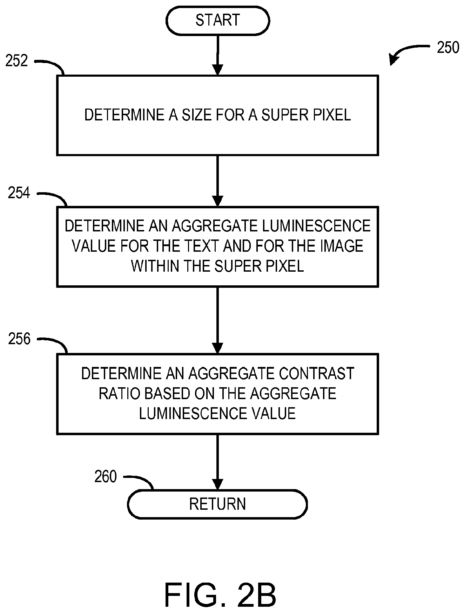

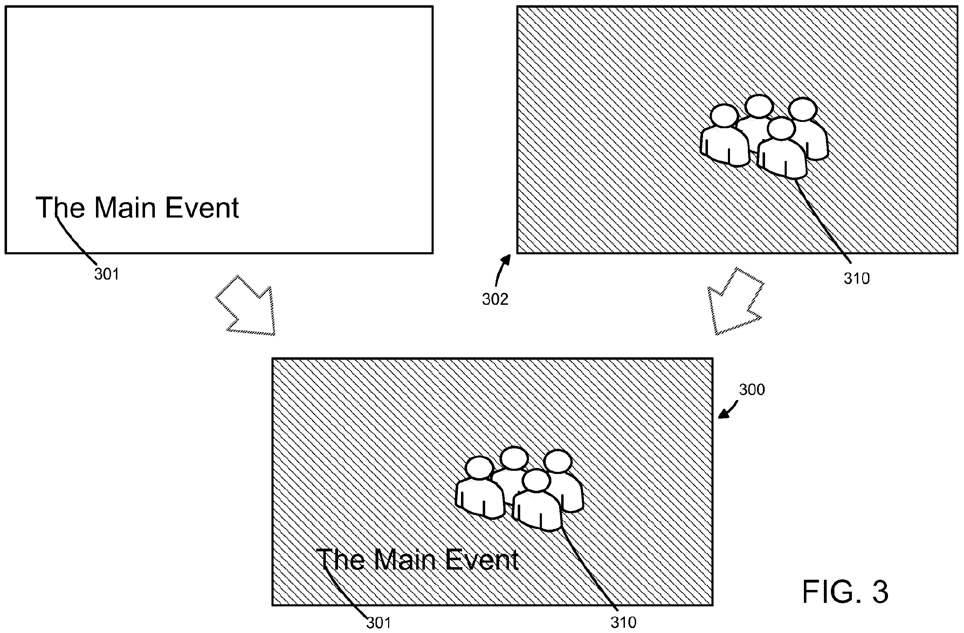

Referring now to FIGURE 2B, one illustrative example of a routine 250 for determining an aggregate contrast ratio is show and described. As described above, the aggregate contrast ratio may be one of the factors used in determining a legibility score associated with the input data or a generated model. The following description provides a high level overview of one illustrative routine for determining an aggregate contrast ratio. This description is supplemented with additional details and other examples shown in FIGURE 3 and FIGURES 4A- 4F.

Generally described, the aggregate contrast ratio may be based on an aggregate luminance value associated with the text and an aggregate luminance value associated with the image. The aggregate luminance values may be measured and aggregated from one or more defined sample areas of a rendering or a transformation of the input data or the model data. Since the defined sample areas, which are also referred to herein as "super pixels," are defined areas within a rendering or a transformation, each super pixel may include a number of graphical pixels. For illustrative purposes, the term "graphical pixel" may refer to, for example, the smallest addressable element of a raster image.

The routine 250 begins at operation 252 where the program module 108 determines a size, or at least one dimension, for the super pixel. Generally described, the size of the super pixel may be based on one or more factors including the stroke or line thickness of one or more characters of the text, the point size and/or other aspects of the data defining the text and/or the characteristics of the image. By selecting an appropriate size for the super pixel that is used to calculate aggregate luminance values, accurate legibility scores may be achieved while mitigating the need for demanding computational resources.

In some configurations of operation 252, the size of the super pixel may be based on the characteristics of the text. In one illustrative example, a super pixel may be in the form of a square. The size of the square, e.g., one dimension of the square, may be less than half of the stroke thickness of one or more characters of the text. In another example, one dimension of the square may be less than half of the height of one or more characters of the text. As can be appreciated, such dimensions may be determined in a number of ways. For instance, input data or a generated model may include data describing a font and a font size. This information may be used to determine a line thickness or character height of one or more characters without the need to actually render the text in an image. One or more known methods for determining the line thickness or character height may be used in operation 252.

The size and shape of the super pixel may vary depending on the desired result. For instance, the super pixel may be any shape, such as a circle, oval or rectangle, and the dimensions of the super pixel may have a broad range depending on the desired output. The size and shape of the super pixel may be based on the input data 110, other data or contextual information interpreted from the input data 110 or other data. As can be appreciated, the examples provided herein are provided for illustrative purposes and are not to be construed as limiting. With reference to FIGURES 3 and 4A, an illustration of a super pixel is shown and described.

Turning briefly to FIGURE 3, an example transformation 300 is shown and described. This illustration shows how text 301 and an image 302 from input data 110 or model data may be transformed or rendered into the transformation 300. The transformation 300 includes text 301 that is superimposed over an image 302. In this example, the image 302 also contains objects 310, which are also illustrated in the transformation 300. In this example, it is given that the text 301 may be in a first color, which for illustrative purposes is shown in black, and the image 302, may include a range of colors, which for illustrative purposes is represented by a diagonal line pattern.

FIGURE 4A illustrates a representative section 400 of the transformation 300. The representative section 400 of the transformation 300 includes the first character 402, which is the first occurrence of the letter "T" of the text 301 shown in FIGURE 3. FIGURE 4A also depicts a first super pixel 401A and a second super pixel 401B. For illustrative purposes, the first super pixel 401A, the second super pixel 401B and the other individual squares depicted in FIGURE 4A are hereinafter referred to collectively and/or generically as "super pixels 401."

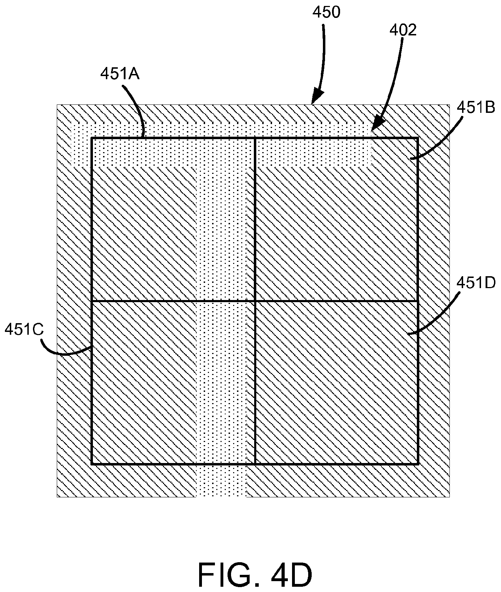

As shown in FIGURE 4A, in this example the size of the super pixels 401 are configured such that one side, e.g., one dimension, of the super pixel, has a length that is less than half the thickness of the character. Again, as noted above, this technique for determining the size of the super pixel is provided for illustrative purposes, and such an example is not to be construed as limiting, as other dimensions and shapes may be used with the techniques disclosed herein. For instance, in another example shown in FIGURES 4D-4F, a super pixel may be based on the height of one or more characters.

Returning to FIGURE 2B, once a size of the super pixel is determined, the routine 250 proceeds to operation 254 where the program module 108 may analyze an individual super pixel to determine an aggregate luminance value for the text 301 and an aggregate luminance value for the image 302. Generally described, a luminance value is measured for each graphical pixel within the super pixel. The luminance values measured from each graphical pixel associated with the text 301 are aggregated to determine the aggregate luminance value for the text 301. In the case where the text color is solid, the single luminescence value can be determined (based on the text color), but in the case where the text itself is filled with more than one color, then luminance should be calculated by aggregating only the pixels that comprise the strokes of the text, without regard for the background pixels. In addition, without regard to which pixels the text would overlay, the luminance values measured from each graphical pixel associated with the image 302 are aggregated to determine the aggregate luminance value for the image 302. Additional details and examples related to operation 254 are provided below and shown in FIGURES 4A-4F.

Next, at operation 256, the program module 108 determines the aggregate contrast ratio based on the aggregate luminance values. Operation 256 may involve any known technique for determining a contrast ratio based on at least two luminance values, and/or any other data such as RGB color or any other related data. In applying the above-described example to operation 256, the aggregate luminance value for the text and the aggregate luminance value for the image may be both applied to known techniques for determining a contrast ratio to determine an aggregate contrast ratio. Any technique for determining a contrast ratio based on at least two luminance values or two brightness values may be used. Such techniques are known in the art, thus specific example equations are not shown here. Upon the completion of operation 256, the routine 250 proceeds to operation 260 where the routine 250 returns to either operation 204 or operation 210 of FIGURE 2A, where the aggregate contrast ratio may be used to determine one or more legibility scores.

As briefly described above, FIGURES 4A-4C provide illustrative examples of how a super pixel may be used to determine the aggregate luminance values. As summarized above, FIGURE 4A illustrates a representative section 400 of the transformation 300. The representative section 400 of the transformation 300 includes the first character 402, which is the first occurrence of the letter "T" of the text 301 shown in FIGURE 3. FIGURE 4A also depicts a first super pixel 401A and a second super pixel 401B.

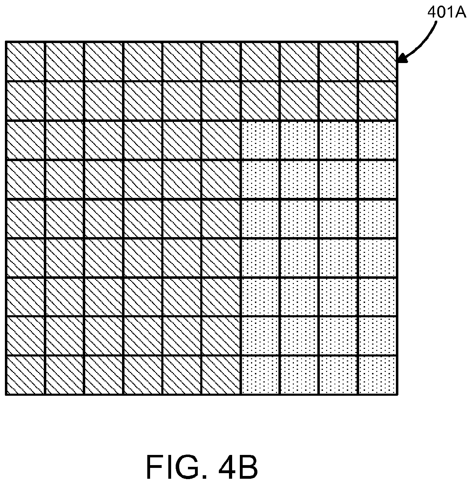

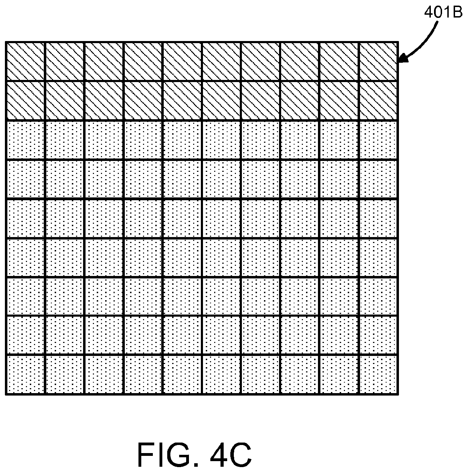

FIGURE 4B shows the first super pixel 401A and FIGURE 4C shows the second super pixel 401B. As shown, each super pixel comprises a number of graphical pixels, which are each represented by a square within the super pixels 401. As also can be appreciated, a super pixel 401 may include many more or fewer graphical pixels than shown here. This representation is only provided for illustrative purposes and is not to be construed as limiting.

In applying routine 250 to the first super pixel 401A, a luminance value is measured for each graphical pixel within the super pixel. Specifically, the luminance values measured from each graphical pixel associated with the text 301 are aggregated to determine the aggregate luminance value for the text 301. In this illustrative example, the graphical pixels associated with the text 301 are represented by the squares having a dotted pattern. In some configurations, the luminance values for these graphical pixels may be averaged to determine an aggregate luminance value for the text 301. In other configurations, in which the text color is static throughout, no calculation is necessary.

In addition, the luminance values measured from each graphical pixel associated with the image 302 are aggregated to determine the aggregate luminance value for the image 302. In this illustrative example, the graphical pixels associated with the image 302 are represented by the squares having a diagonal line pattern. In some configurations, the luminance values for the graphical pixels associated with the image 302 may be averaged to determine an aggregate luminance value for the image 302. Although this illustrative example averages the individual luminance value to determine the aggregate luminance value, other equations and techniques may be used to aggregate the luminance values.

By the use of a single super pixel, the aggregate luminance value for the image 302 and the aggregate luminance value for the text 301 may be used to determine an aggregate contrast ratio. Although only one super pixel may be used, it can be appreciated that other configurations may use other numbers of super pixels to determine a second aggregate contrast ratio. It can be further appreciated that the first aggregate contrast ratio and the second aggregate contrast ratio may be processed in a number of different ways. For instance, the lower of the two values may be used in a comparison with a threshold. In other examples, the first aggregate contrast ratio and the second aggregate contrast ratio may be aggregated by one or more calculations.

The above-described techniques may be applied to other super pixels, such as the second super pixel 401B shown in FIGURE 4C. Similar to the example described above, the luminance values for the graphical pixels associated with the text 301, which are the graphical pixels represented by the squares having a dotted pattern, may be aggregated. In addition, the luminance values for the graphical pixels associated with the image 302, which are the graphical pixels represented by the squares having a diagonal line pattern, may be aggregated. The aggregated luminance values that are determined for the second super pixel 401B may be processed to determine a second aggregate contrast ratio for the image 302.

In some configurations, the aggregate contrast ratio of the first super pixel 401A may be processed with the aggregate contrast ratio of the second super pixel 401B. A number of techniques may be used to process the aggregate contrast ratios from different super pixels. In one illustrative example, as described above, different aggregate contrast ratios may be compared, and one of the aggregate contrast ratios may be selected for use to determine a legibility score. In other examples, a number of aggregate contrast ratios may be combined, averaged, or processed in other ways.

It may be also appreciated that some super pixels may only contain graphical pixels associated with the image 302, and some super pixels may only contain graphical pixels associated with the text 301. In a scenario where a super pixel only contains graphical pixels associated with the text 301, the luminance values for each graphical pixel of the super pixel are processed to determine the aggregate luminance value for the text 301. As can be appreciated, this value may be processed, e.g., averaged, with other aggregate luminance values from other super pixels. Super pixels that only contain graphical pixels associated with the image 302 may be processed in a similar manner.

The above examples are provided for illustrative purposes and are not to be construed as limiting. As can be appreciated, that non-overlapping super pixels can be disregarded. It can be further appreciated that the super pixels may be processed and considered with a different heuristic than the overlapping techniques described above.

FIGURES 4D-4F illustrate another example of a super pixel that is based on the height of the characters of the text 301. Specifically, FIGURE 4D illustrates a representative section 450 of the transformation 300. The representative section 450 of the transformation 300 includes the first character 402, which is the first occurrence of the letter "T" of the text 301 shown in FIGURE 3. FIGURE 4D also depicts a first super pixel 451A, a second super pixel 451B, a third super pixel 451C and a fourth super pixel 451D (collectively referred to herein as "super pixels 451"). As shown, the super pixels 451 of FIGURE 4D are sized to be slightly less than half the height of the character of the text 301.

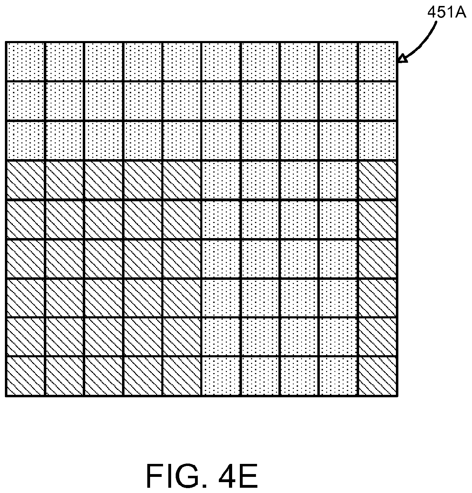

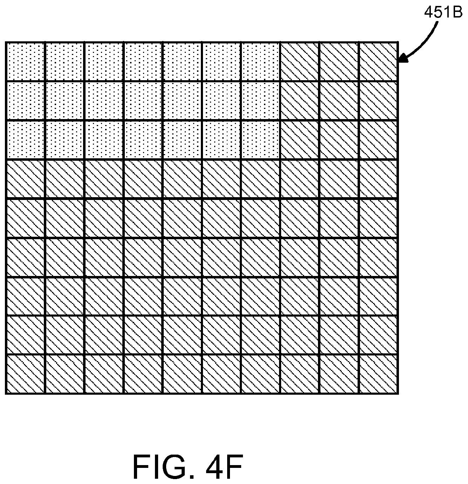

FIGURE 4E shows the first super pixel 451A and FIGURE 4F shows the second super pixel 451B. As shown, each super pixel comprises a number of graphical pixels, which are each represented by squares within the super pixels 451. As can be appreciated, by using the techniques described herein, the aggregate luminance value for the text 301 and the aggregate luminance value for the image 302 may be determined by the use of these super pixels 451.

As summarized above, a number of treatments may be applied to the input data 110 or other data to optimize the legibility of displayed text. As summarized above, the treatments that may be applied to the input data 110 may include one or more operations that include modifying the brightness, size, color or other aspects of the text and/or the display environment. A treatment may also include the generation of a backdrop positioned behind the text to increase the contrast between the text and the display environment, i.e. image 302. A treatment may also include the identification of salient and invariant regions within the display environment, such as salient and invariant regions within an image. The text may be repositioned based on the location of the salient and invariant regions. A treatment may also include a modification of the display environment which, for example, may include zooming or panning of an image or video. As will be described in more detail below, a treatment may include any type of modification to the text and/or the display environment. To illustrate some examples, FIGURES 5A-5F illustrate how one or more treatments may be utilized to modify the example rendering of the input data shown in FIGURE 3.

FIGURE 5A illustrates a sample transformation 501 generated from a model resulting from a global treatment that is applied to the input data 110. For illustrative purposes, a global treatment is referred to a modification that is applied to the entire image 302. In this illustrative example, as represented by the modified shade shown in FIGURE 5A, the brightness of the entire image is adjusted to increase the contrast ratio between the text 301 in the image 302. In such an example, the brightness may be reduced if the text is rendered with a light color. Alternatively, the brightness may be increased if the text is rendered with a dark color. Although this example illustrates a treatment where the brightness of the image 302 may be modified, a global treatment may include a modification to the colors of the image 302 or a modification of any other parameter that may increase the contrast ratio between the image 302 and the text 301.

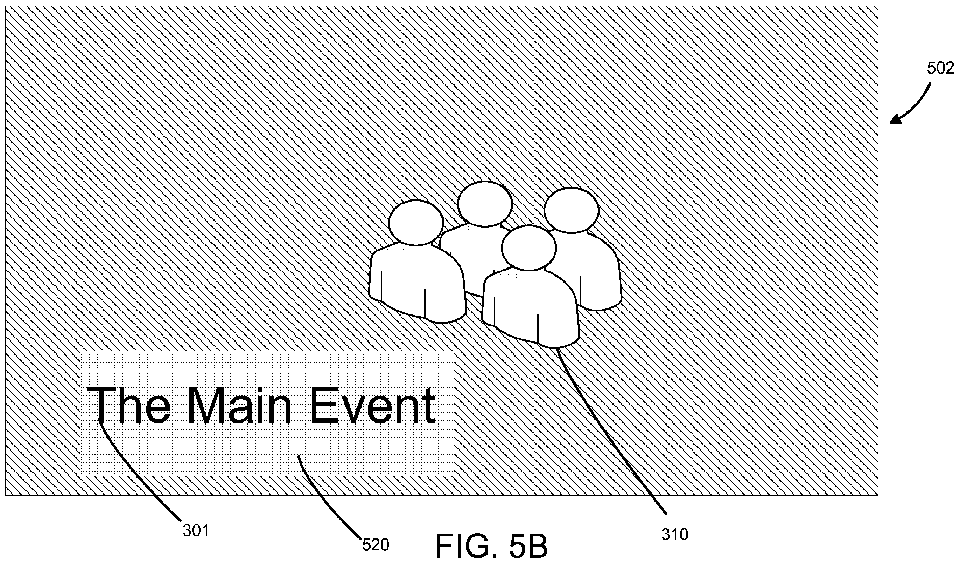

FIGURE 5B illustrates another sample transformation 502 generated from a model resulting from a treatment that introduces a backdrop 520 behind the text 301. In this type of treatment, the backdrop may be opaque or the backdrop may be, at least partially, translucent. As can be appreciated, the introduction of a backdrop may increase the legibility of the text by introducing a fixed contrast ratio between the text 301 and the backdrop 520.

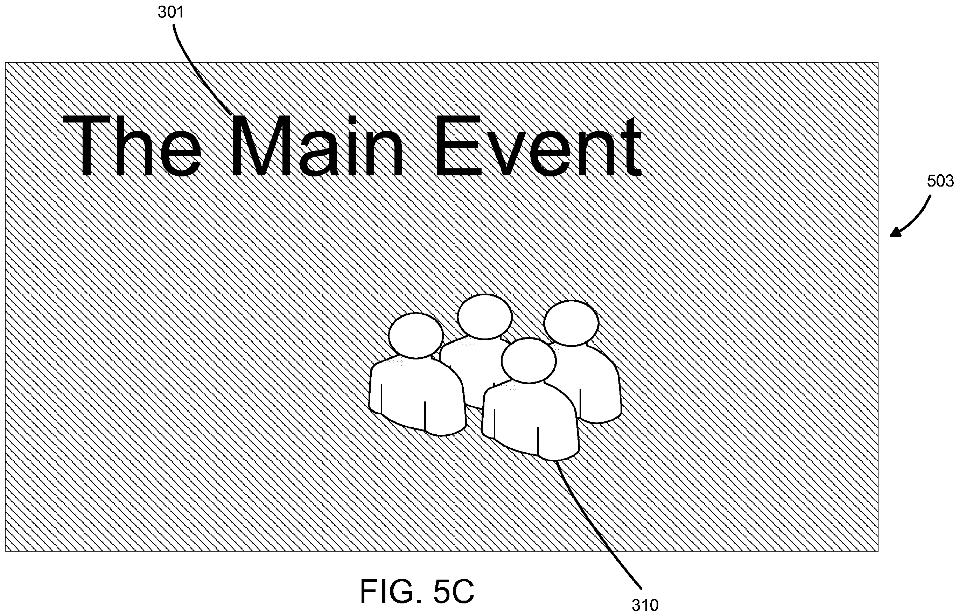

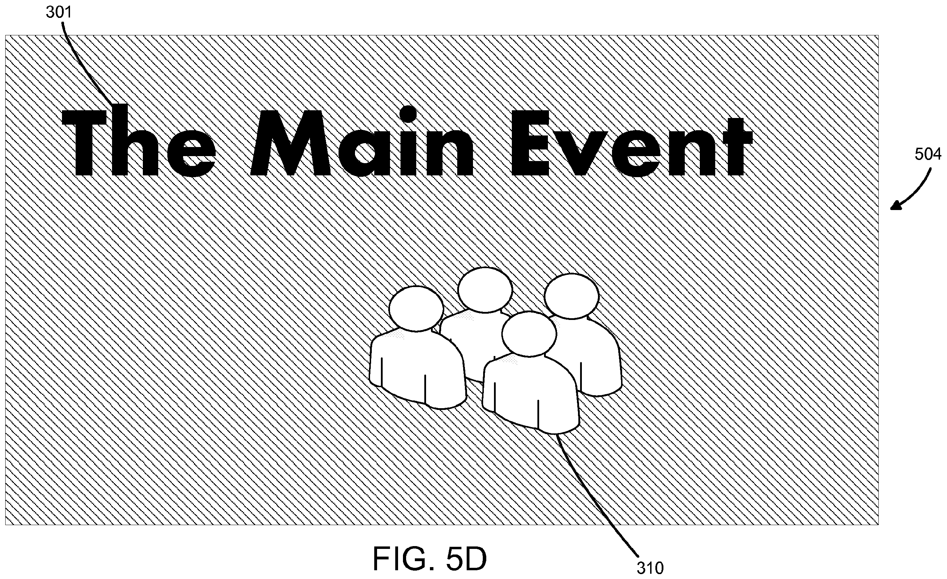

FIGURES 5C-5F respectively illustrate other sample transformations 503-506 generated from models where one or more treatments introduce modifications to the input data 110. Specifically, in the example of FIGURE 5C, as shown in the transformation 503, the text 301 is positioned in the upper left corner of the image 302, as opposed to the lower left corner as shown in the transformation 300 of the input data 110. In addition, as shown in FIGURE 5C, the treatment applied in this example involves the modification of the font size. In such an example, the font size of the text 301 is increased, e.g., the font size may be doubled from 10 to 20. The example of FIGURE 5D involves a combination of treatments. Specifically, in this example, as shown in the transformation 504, the position of the text 301 is now placed in the upper left corner, the font size has increased relative to the font size defined in the input data 110, and the font has been changed, e.g., from Arial to Aharoni.

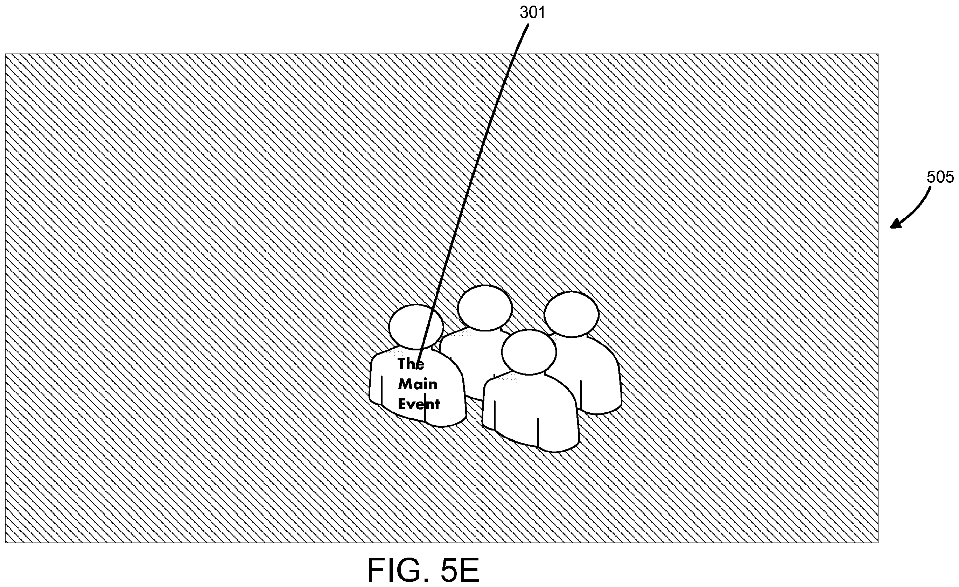

The example of FIGURE 5E also involves a combination of treatments. Specifically, in this example, as shown in the transformation 505, the position of the text 301 is modified, the font size of the text 301 is decreased and the arrangement of the text 301 is modified. In this illustrative example, line breaks are introduced to change the layout of the text 301. As can be appreciated, these examples are provided for illustrative purposes. It can be further appreciated that many other types of treatments or combinations of treatments to the text and/or the image, e.g., the image, may be utilized.

As summarized above, a treatment may involve the identification of salient regions and invariant regions of an image. In some configurations, a treatment may modify the text 301 and/or modify the image 302 based on the location of the salient regions and invariant regions. Referring to FIGURES 6A-6D, illustrative examples of treatments involving salient regions and invariant regions are shown and described below.

The illustration of FIGURE 6A shows the transformation 300 of the input data 110. By the use of known techniques, a salient region 601 and more than one invariant region 602 may be determined. As summarized above, the salient region and the invariant region may be detected by the use of known techniques. For example, such techniques may involve known object recognition algorithms and/or other algorithms for detecting variations in color or variations in any other parameter or shape. In yet another example, variations in color, brightness and/or other aspects may be used to detect a salient region or an invariant region. Any other recognition algorithm may be used to detect a face, text, or any other object of interest. As can be appreciated, the processing to determine the salient region 601 and the invariant region 602 may involve the analysis of the image 302 without including an analysis of the text 301 defined in the input data 110. Thus, the text 301 depicted in FIGURE 3 may not be considered in this analysis. However, if image 302 includes text in the image data, the area around the text may be identified as a salient region.

As shown in FIGURE 6A, the salient region 601 is identified around the objects 310. In addition, the invariant regions 602 are associated with areas of the image 302 having a consistent texture and or color. As can be appreciated, an invariant region 602 may also be identified within a salient region 601. For example, one of the objects 310 may have a region where the color or brightness may not vary beyond a pre-determined threshold. Thus, as shown in this example, an invariant region 602 may be identified within the body of one of the objects 310.

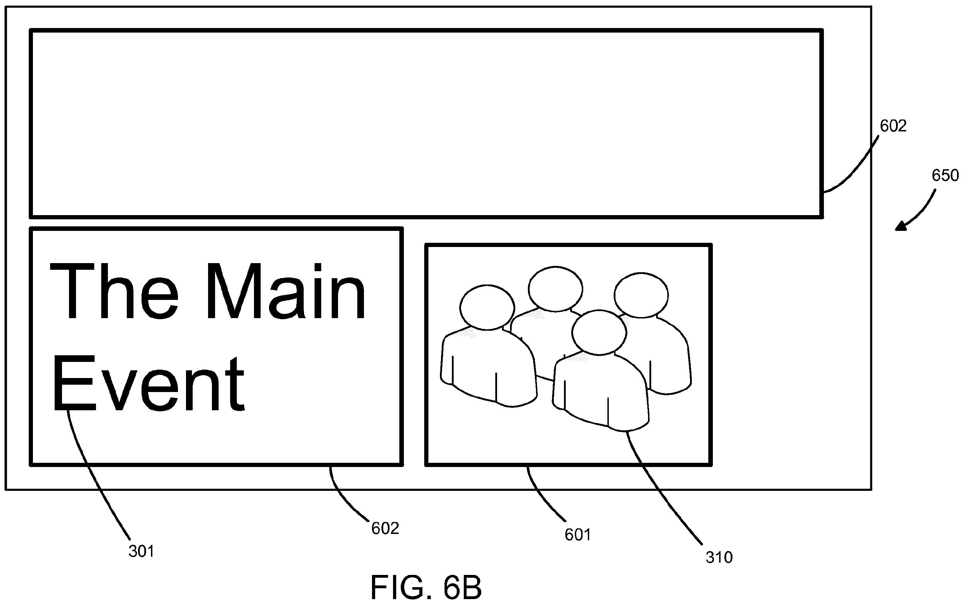

The salient regions 601 and invariant regions 602 may be determined prior to application of one or more treatments. The text 301 and/or the image 302 may be modified depending on the identified regions. For example, FIGURE 6B illustrates a transformation 650 that is generated from a model resulting from a treatment that introduces a modification to the text 301 of the input data 110. In this example, the text 301 may be modified and the text 301 may be positioned within an invariant region 602. As will be described in more detail below, when the legibility score of such a model is determined, the increased size of the text 301 may increase the legibility score. In addition, the legibility score may increase given that the text 301 is positioned in the invariant region 602.

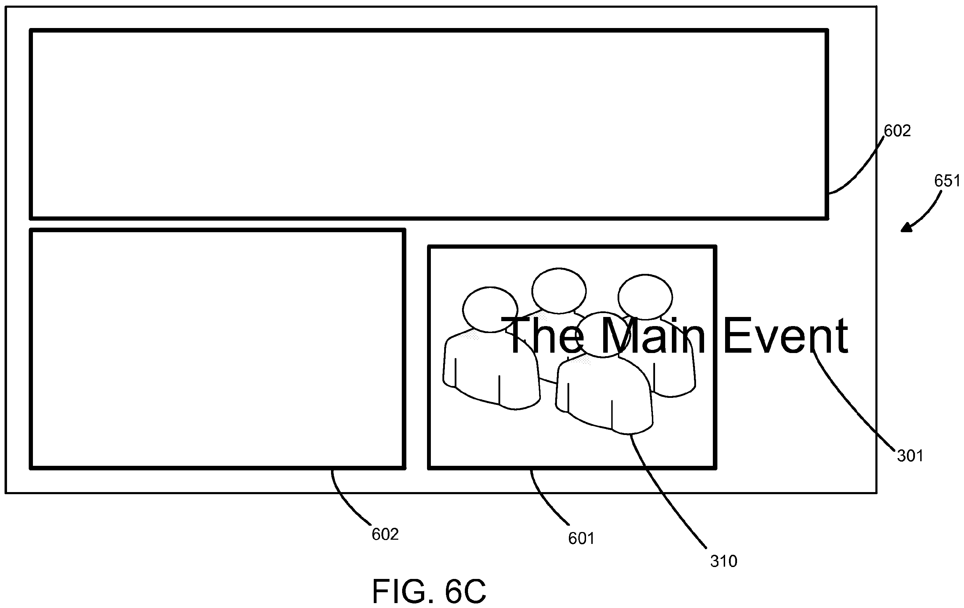

FIGURE 6C illustrates a transformation 651 that is generated from a model resulting from a treatment that introduces a modification to the text 301 of the input data 110. As shown, this example shows that the text 301 is positioned in a salient region 601. Also shown, the text 301 is also positioned over the objects 310. This example is provided to illustrate that, although the legibility of the text 310 may be improved by certain factors, such as an increased font size or an increased contrast ratio, treatments that interfere with objects 310 may not be desirable. As will be described in more detail below, when the legibility score of such a model is determined, text that may interfere with one or more objects or text that is positioned in a salient region 601 may lower an associated legibility score even if the aggregate contrast ratio and other factors are improved.

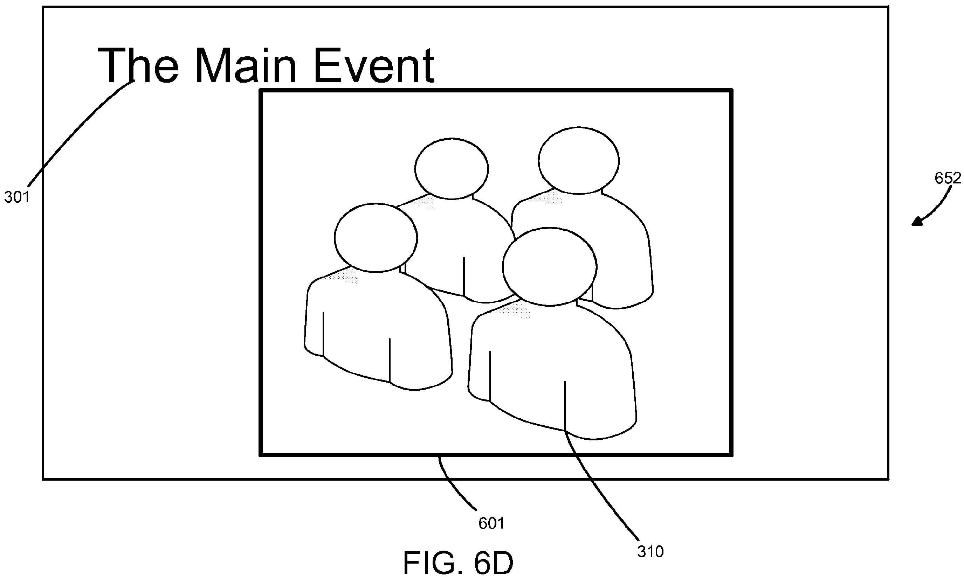

FIGURE 6D illustrates another transformation 652 that is generated from a model resulting from a treatment that introduces a modification to the text 301 and the image 302. As shown, this example shows that the text 301 is positioned in a salient region 601 near the top of the transformation 652. In addition, another treatment is applied to the original image 302. In this illustrative example, pan and zoom operations are applied to the image 302 to create the modified perspective of the image 302. As will be described in more detail below, when the legibility score of such a model is determined, the position of the text 301 relative to the salient region 601 and/or the objects 310 may increase the legibility score.

Techniques described herein may also process multiple legibility scores that may be produced from a single source of data, such as the input data 110 or model 114. For example, if there are multiple lines of text superimposed over an image, a legibility score may be determined for different parts of the text. In one specific example, a legibility score may be determined for each line of text.

When multiple legibility scores are generated, the legibility scores may be used in a number of different ways. For instance, in some configurations, when a set of legibility scores are produced, the lowest legibility score of the set may be used in operation 206 or operation 212 of routine 200, where the lowest legibility score may be compared with a threshold. In other configurations, the set of legibility scores may be aggregated into an aggregate legibility score, and the aggregate legibility score may be used in the comparison with one or more thresholds. As can be appreciated any technique for aggregating multiple legibility scores, such as an algorithm for determining an average, may be used.

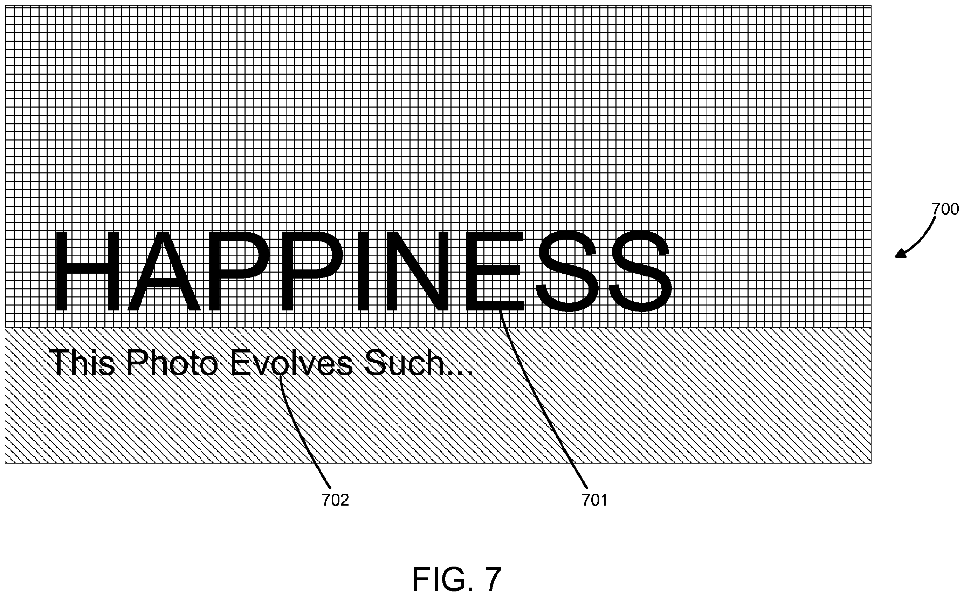

The example of FIGURE 7 shows a transformation 700 having two different lines of text, a title 701 and a subtitle 702. As shown, the transformation 700 also contains two colors, a first color arranged behind the title 701 and a second color arranged behind the subtitle 702. As can be appreciated, if each line is analyzed separately, the techniques described herein may produce two different legibility scores. In such an example, the lower of the two scores may be used in the processing of routine 200, which may compare the lower of the two scores with a threshold. The input data or model data defining the image 700 and the text 701 and 702 may then be processed by one or more treatments. For example, as described above, some treatments may modify the text 701 and 702, modify the image 700, or modify both text 701 and 702 and the image 700. As each treatment is applied, each line of text may be analyzed separately to determine a legibility score.

Returning now to FIGURES 3 and 5A-6D, several example techniques for determining a legibility score are provided. As described above, a legibility score may be determined for input data 110 of each model 114 that is generated. The legibility score may be based on a single factor or any combination of factors depending on the desired result. For example, the legibility score may be based on an aggregate contrast ratio. In some configurations, the legibility score may be based on characteristics of the text, such as the font, font size and/or other factors. In other configurations, the legibility score may be based on characteristics of the display environment, such as an image or video that is displayed with the text. For instance, as described in more detail below, the legibility score may be based, least in part, on the position of the text relative to a salient region or an invariant region.

For illustrative purposes, several examples are provided below to show how some factors may be used to determine a legibility score. As can be appreciated, the legibility score may be based on a single factor or a combination of factors. Thus, it should be appreciated that these examples are not to be construed as limiting.

With reference to the example of FIGURE 3, the following description provides examples of how a legibility score may be determined for a transformation 300 of the input data 110. In a first example, it is given that the legibility score is based on an aggregate contrast ratio, font and font size. The input data 110 for this first example may include parameters defining the text 301 as an "Arial" font having a font size of 10, and having a yellow color. The input data 110 for this first example may also include image data defining the image 302 as having a white background and a number of objects 310. In this example, with the given colors, for illustrative purposes, it may also be a given that the aggregate contrast ratio between the text 301 and the image 302 is two. As can be appreciated, in other scenarios, this value can be determined by the techniques described above and shown in FIGURE 2B.

The given parameters and the determined aggregate contrast ratio may be aggregated in a number of ways to determine the legibility score. The parameters and the aggregate contrast ratio may also be normalized and weighted. For example, this sample may produce a legibility score that is calculated by the following equation: Legibility score = aggregate contrast ratio X a first normalization factor + font score X a second normalization factor + font size X a third normalization factor.

Each font may be given a particular score depending on the characteristics of the font. For instance, Arial may be associated with a font score of 10, and Aharoni may be associated with a font score of 15. In this example, as can be appreciated, Aharoni may be associated with a higher font score because it characteristically has thicker lines. Again, this example is provided for illustrative purposes and is not to be construed as limiting, as any range of scores may be associated with a particular font or a number of fonts. In addition, the normalization factors may be any desired value depending on the desired result.

As can be appreciated, if it is desired to place a higher priority on the contrast versus the font type, the normalization factor for the contrast ratio may be a higher value than the normalization factor for the font. In this example, for illustrative purposes, the first normalization factor for the aggregate contrast ratio, second normalization factor for the font and the third normalization factor for the font size are respectively: 1, .2 and .2. Thus, in applying the given parameters, a sample legibility score for the image 302 may be 2 x 1 + 10 x .2 + 10 x .2 = 6. As can be appreciated, the examples provide herein are not to be construed as limiting, as the normalization factors and the parameters may be any value depending on the desired result.

Referring again briefly to the example of FIGURE 5A, additional details of a sample legibility score is provided for the sample transformation 501. As summarized above, the sample transformation 501 is a product of a global treatment that is applied to the input data 110. To further this illustrative example, it is a given that the global treatment modifies the white background of the original image 302 to a gray color. As can be appreciated, given that the text color is yellow, the aggregate contrast ratio between the text and the image may increase as a result of this modification. In applying the equation described above, an increase in the aggregate contrast ratio also increases the legibility score. As can be appreciated, the treatment applied in the example of FIGURE 5B would also yield an increase in the legibility score. Given that a drop shadow or backdrop positioned behind the text 301 may be designed to increase the aggregate contrast ratio, such a treatment would correspondingly increase the legibility score.

Referring again briefly to the example of FIGURE 5C, additional details of a sample legibility score is provided for the sample transformation 503. As summarized above, the sample transformation 503 is a product of a treatment that modified the text 301 of the input data 110. In this example, the treatment applied in this example involves the modification of the font size. Specifically, in this example treatment, the font size of the text 301 was increased from 10 to 20. In applying the equation described above, an increase in the font size also increases the legibility score. Given the equation for this example calculation, the legibility score is not impacted by the new position the text.

Referring again briefly to the example of FIGURE 5D, additional details of a sample legibility score is provided for the sample transformation 504. As summarized above, the sample transformation 504 is a product of a combination of treatments that modified the text 301 of the input data 110. As described above, the treatment applied in this example involves the modification of the font size and the font. Specifically, in this example treatment, the font size of the text 301 is increased from 10 to 20 and the font is changed from Arial to Aharoni. Given that Aharoni has a font score of 15 and Arial has a font score of 10, and given the increase in the font size, in applying the equation described above, an increase in the font size and the font increases the legibility score. In addition, given the additional treatment to the font, it can be appreciated that the legibility score for the sample transformation 504 is greater than the sample transformation 503 of FIGURE 5C.

Referring again briefly to the example of FIGURE 5E, additional details of a sample legibility score is provided for the sample transformation 505. As summarized above, the sample transformation 505 is a product of a combination of treatments that modify the text 301 of the input data 110. As described above, the treatment applied in this example involves the modification of the font size. Specifically, in this example treatment, the font size of the text 301 is decreased from 10 to 2. In addition, the text 301 is positioned over one of the objects 310. Given that the font size is reduced, in applying the equation described above, a decrease in the font size also decreases the legibility score. Also, in this example, it is a given that the new position of the text 301 changes the aggregate contrast ratio since the text is positioned over a new portion of the image. As can be appreciated, given the sample equation, any adjustment in the aggregate contrast ratio may impact the legibility score.

In some configurations, the program module 108 may be configured to allow other factors to influence the legibility score using different techniques. In one example, a treatment preference may influence a legibility score associated with a generated model. A treatment preference, which may be a user input or a predetermined configuration setting, may be configured to raise or lower a legibility score depending on the detection of one or more conditions. In some configurations, a treatment preference may influence a legibility score when certain types of treatments are applied. For instance, a treatment preference may be configured to reduce a legibility score if a treatment utilizes a drop shadow in the generation of a model. This enables a user to communicate a preference if, for instance, the user does not desire the use of a drop shadow. In another example, a treatment preference may be configured to reduce a legibility score if a global treatment involving a brightness or color adjustment is applied. Such a configuration may be desired, for example, when an intended use of the model places a priority on the image.

In yet another example, a treatment preference may be configured to reduce a legibility score if a treatment involves repositioning text over a particular region, such as a salient region. An illustration of this example is shown in FIGURE 6C. As shown, the treatment positioned the text 301 in a salient region 601. As also shown, the text 301 is positioned over the objects 310. This example is provided to illustrate that, although aspects of the legibility of the text 310 may be improved, such as an increased aggregate contrast ratio, treatments that interfere with certain aspects, such as the objects 310, may not be desirable. The use of the treatment preference may be introduced so the legibility score will reflect that undesirable result.

In another example, a relative importance of legibility may influence a legibility score or a threshold. This type of data may be introduced if it is desirable to place a priority on the legibility of the text. For instance, a threshold may increase if the text may be used for close captioning. Conversely, a threshold may decrease if the text may be used for aesthetic reasons. As can be appreciated, this factor may influence a legibility score depending on the priority of the text.

As shown in the example shown in FIGURE 6B, a treatment preference may be configured to increase a legibility score if a treatment involves repositioning text over a particular region, such as an invariant region. An illustration of this example is shown in FIGURE 6C. As shown, the treatment applied to the input data positioned the text 301 in an invariant region 602. This example is provided to illustrate that the use of such treatment preferences may be used so the legibility score will reflect a desirable result, and models reflecting those desirable results will be ranked higher.

The examples illustrating aspects of a treatment preference are provide for illustrative purposes and are not to be construed as limiting. As a treatment preference may be used to adjust a legibility score based on any scenario. For example, a treatment preference may be used to influence a legibility score if the image has been cropped, as shown in FIGURE 6C. In yet another example, a treatment preference may be configured to adjust a legibility score if a backdrop is used. The treatment preferences may be configured to adjust a legibility score based on any scenario or condition.

As summarized above, the legibility scores of the models, i.e. example transformations 501-505 and transformations 650-652, may be compared against one or more thresholds. In some configurations, the legibility score of the generated models are compared with the legibility score of the input data 110. It can be appreciated that legibility scores associated with the generated models may be compared with the legibility score associated with other models. Such comparisons may be used to determine if a particular model may be used as an output.

As summarized above, techniques described herein obtain and process feedback on the generated models. For example, an interface may be configured to obtain feedback from a user or a computer. Techniques herein may use the feedback to select treatments that are applied to the input data or model data. For example, when one or more models are presented to a user, the user may provide various types of feedback. In one form of feedback, the user may indicate if a particular treatment is desirable or undesirable. In another form of feedback, the user may indicate if adjustments may be needed to a particular model. For instance, if a model involves a modification of the text, such as the introduction of a new font, the program module 108 may be configured to interpret the feedback, which may indicate the user would like to see more treatments involving the same treatments of other treatments.

The feedback may also be used for machine learning purposes. For instance, techniques described herein may store and process the feedback to allow processes disclosed herein to benefit from historical feedback data. In some configurations, stored feedback information may be used to influence the techniques described herein to select certain types treatments or specific combinations of treatments. For instance, if a data store contains a number of feedback entries that rejected treatments involving a font transition from Courier to Arial, techniques disclosed herein may utilize such data to minimize or eliminate the use of such treatments. Conversely, if the historical feedback data indicates that certain treatments receive positive feedback, techniques disclosed herein may be influenced to utilize such treatments more frequently. Although these examples are provided for illustrative purposes, such examples should not be construed as limiting.

FIGURE 8 shows additional details of an example computer architecture 800 for a computer, such as the computing device 102 shown in FIGURE 1, capable of executing the program components described above for optimizing aesthetics and/or legibility of displayed text. Thus, the computer architecture 800 illustrated in FIGURE 8 illustrates an architecture for a server computer, mobile phone, a PDA, a smart phone, a desktop computer, a netbook computer, a tablet computer, and/or a laptop computer. The computer architecture 800 may be utilized to execute any aspects of the software components presented herein.

The computer architecture 800 illustrated in FIGURE 8 includes a central processing unit 802 ("CPU"), a system memory 804, including a random access memory 806 ("RAM") and a read-only memory ("ROM") 808, and a system bus 810 that couples the memory 804 to the CPU 802. A basic input/output system containing the basic routines that help to transfer information between elements within the computer architecture 800, such as during startup, is stored in the ROM 808. The computer architecture 800 further includes a mass storage device 812 for storing an operating system 807, and one or more application programs including, but not limited to, the content creation application 813, program module 108, and a web browser application 810. The illustrated mass storage device 812 may also store model 114, which may include any data structure to facilitate the techniques disclosed herein.

The mass storage device 812 is connected to the CPU 802 through a mass storage controller (not shown) connected to the bus 810. The mass storage device 812 and its associated computer-readable media provide non-volatile storage for the computer architecture 800. Although the description of computer-readable media contained herein refers to a mass storage device, such as a solid state drive, a hard disk or CD-ROM drive, it should be appreciated by those skilled in the art that computer-readable media can be any available computer storage media or communication media that can be accessed by the computer architecture 800.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 800. For purposes the claims, the phrase "computer storage medium," "computer-readable storage medium" and variations thereof, does not include waves, signals, and/or other transitory and/or intangible communication media, *per se.*

According to various configurations, the computer architecture 800 may operate in a networked environment using logical connections to remote computers through the network 1056 and/or another network (not shown). The computer architecture 800 may connect to the network 1056 through a network interface unit 814 connected to the bus 810. It should be appreciated that the network interface unit 814 also may be utilized to connect to other types of networks and remote computer systems. The computer architecture 800 also may include an input/output controller 816 for receiving and processing input from a number of other devices, including a keyboard, mouse, or electronic stylus (not shown in FIGURE 8). Similarly, the input/output controller 816 may provide output to a display screen, a printer, or other type of output device (also not shown in FIGURE 8).

It should be appreciated that the software components described herein may, when loaded into the CPU 802 and executed, transform the CPU 802 and the overall computer architecture 800 from a general-purpose computing system into a special-purpose computing system customized to facilitate the functionality presented herein. The CPU 802 may be constructed from any number of transistors or other discrete circuit elements, which may individually or collectively assume any number of states. More specifically, the CPU 802 may operate as a finite-state machine, in response to executable instructions contained within the software modules disclosed herein. These computer-executable instructions may transform the CPU 802 by specifying how the CPU 802 transitions between states, thereby transforming the transistors or other discrete hardware elements constituting the CPU 802.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope of the present description, with the foregoing examples provided only to facilitate this discussion.

In light of the above, it should be appreciated that many types of physical transformations take place in the computer architecture 800 in order to store and execute the software components presented herein. It also should be appreciated that the computer architecture 800 may include other types of computing devices, including hand-held computers, embedded computer systems, personal digital assistants, and other types of computing devices known to those skilled in the art. It is also contemplated that the computer architecture 800 may not include all of the components shown in FIGURE 8, may include other components that are not explicitly shown in FIGURE 8, or may utilize an architecture completely different than that shown in FIGURE 8.

FIGURE 9 depicts an illustrative distributed computing environment 900 capable of executing the software components described herein for optimizing aesthetics and/or legibility of displayed text, among other aspects. Thus, the distributed computing environment 900 illustrated in FIGURE 9 can be utilized to execute any aspects of the software components presented herein. For example, the distributed computing environment 900 can be utilized to execute aspects of the content creation application 813, the program module 108 and/or other software components described herein.

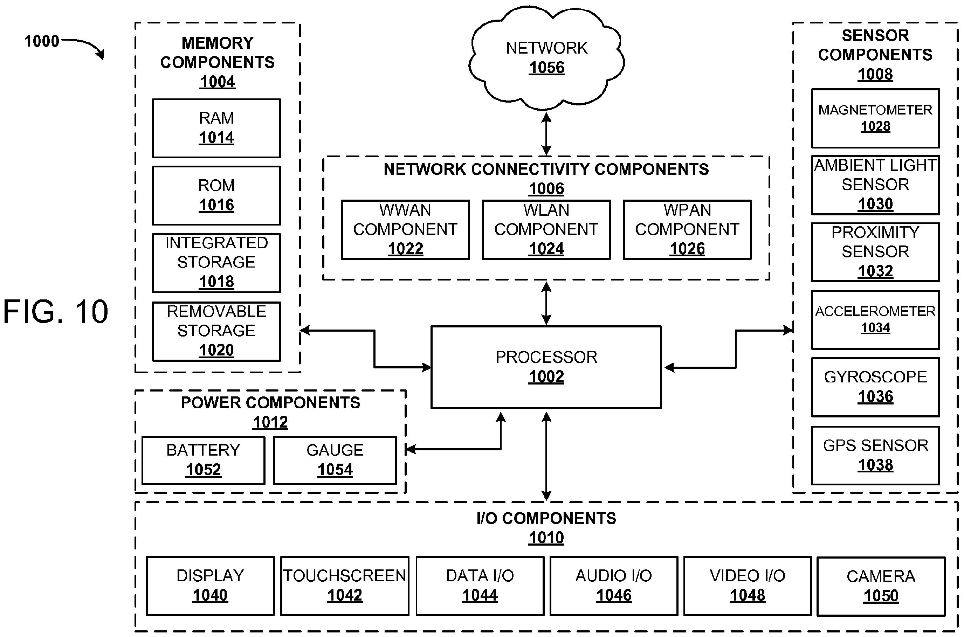

According to various implementations, the distributed computing environment 900 includes a computing environment 902 operating on, in communication with, or as part of the network 904. The network 904 may be or may include the network 1056, described above with reference to FIGURE 8. The network 904 also can include various access networks. One or more client devices 906A-906N (hereinafter referred to collectively and/or generically as "clients 906") can communicate with the computing environment 902 via the network 904 and/or other connections (not illustrated in FIGURE 9). In one illustrated configuration, the clients 906 include a computing device 906A such as a laptop computer, a desktop computer, or other computing device; a slate or tablet computing device ("tablet computing device") 906B; a mobile computing device 906C such as a mobile telephone, a smart phone, or other mobile computing device; a server computer 906D; and/or other devices 906N. It should be understood that any number of clients 906 can communicate with the computing environment 902. Two example computing architectures for the clients 906 are illustrated and described herein with reference to FIGURES 8 and 10. It should be understood that the illustrated clients 906 and computing architectures illustrated and described herein are illustrative, and should not be construed as being limited in any way.

In the illustrated configuration, the computing environment 902 includes application servers 908, data storage 910, and one or more network interfaces 912. According to various implementations, the functionality of the application servers 908 can be provided by one or more server computers that are executing as part of, or in communication with, the network 904. The application servers 908 can host various services, virtual machines, portals, and/or other resources. In the illustrated configuration, the application servers 908 host one or more virtual machines 914 for hosting applications or other functionality. According to various implementations, the virtual machines 914 host one or more applications and/or software modules for optimizing aesthetics and/or legibility of displayed text. It should be understood that this configuration is illustrative, and should not be construed as being limiting in any way. The application servers 908 also host or provide access to one or more portals, link pages, Web sites, and/or other information ("Web portals") 916.

According to various implementations, the application servers 908 also include one or more mailbox services 918 and one or more messaging services 920. The mailbox services 918 can include electronic mail ("email") services. The mailbox services 918 also can include various personal information management ("PIM") services including, but not limited to, calendar services, contact management services, collaboration services, and/or other services. The messaging services 920 can include, but are not limited to, instant messaging services, chat services, forum services, and/or other communication services.

The application servers 908 also may include one or more social networking services 922. The social networking services 922 can include various social networking services including, but not limited to, services for sharing or posting status updates, instant messages, links, photos, videos, and/or other information; services for commenting or displaying interest in articles, products, blogs, or other resources; and/or other services. In some configurations, the social networking services 922 are provided by or include the FACEBOOK social networking service, the LINKEDIN professional networking service, the MYSPACE social networking service, the FOURSQUARE geographic networking service, the YAMMER office colleague networking service, and the like. In other configurations, the social networking services 922 are provided by other services, sites, and/or providers that may or may not be explicitly known as social networking providers. For example, some web sites allow users to interact with one another via email, chat services, and/or other means during various activities and/or contexts such as reading published articles, commenting on goods or services, publishing, collaboration, gaming, and the like. Examples of such services include, but are not limited to, the WINDOWS LIVE service and the XBOX LIVE service from Microsoft Corporation in Redmond, Washington. Other services are possible and are contemplated.

The social networking services 922 also can include commenting, blogging, and/or micro blogging services. Examples of such services include, but are not limited to, the YELP commenting service, the KUDZU review service, the YAMMER enterprise micro blogging service, the TWITTER messaging service, the GOOGLE BUZZ service, and/or other services. It should be appreciated that the above lists of services are not exhaustive and that numerous additional and/or alternative social networking services 922 are not mentioned herein for the sake of brevity. As such, the above configurations are illustrative, and should not be construed as being limited in any way. According to various implementations, the social networking services 922 may host one or more applications and/or software modules for providing the functionality described herein for optimizing aesthetics and/or legibility of displayed text. For instance, any one of the application servers 908 may communicate or facilitate the functionality and features described herein. For instance, a social networking application, mail client, messaging client or a browser running on a phone or any other client 906 may communicate with a networking service 922 and facilitate the functionality, even in part, described above with respect to FIGURE 3.

As shown in FIGURE 9, the application servers 908 also can host other services, applications, portals, and/or other resources ("other resources") 924. The other resources 924 can include, but are not limited to, image and text processing functionality. It thus can be appreciated that the computing environment 902 can provide integration of the concepts and technologies disclosed herein provided herein with various mailbox, messaging, social networking, and/or other services or resources.

As mentioned above, the computing environment 902 can include the data storage 910. According to various implementations, the functionality of the data storage 910 is provided by one or more databases operating on, or in communication with, the network 904. The functionality of the data storage 910 also can be provided by one or more server computers configured to host data for the computing environment 902. The data storage 910 can include, host, or provide one or more real or virtual datastores 926A-926N (hereinafter referred to collectively and/or generically as "datastores 926"). The datastores 926 are configured to host data used or created by the application servers 813 and/or other data. Although not illustrated in FIGURE 9, the datastores 926 also can host or store 2D and 3D environments, data structures, algorithms for execution by a recommendation engine, and/or other data utilized by a content creation program or another module, such as the program module 108. Aspects of the datastores 926 may be associated with a service, such as ONEDRIVE, DROPBOX or GOOGLEDRIVE.

The computing environment 902 can communicate with, or be accessed by, the network interfaces 912. The network interfaces 912 can include various types of network hardware and software for supporting communications between two or more computing devices including, but not limited to, the clients 906 and the application servers 908. It should be appreciated that the network interfaces 912 also may be utilized to connect to other types of networks and/or computer systems.

It should be understood that the distributed computing environment 900 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 900 provides the software functionality described herein as a service to the clients 906. It should be understood that the clients 906 can include real or virtual machines including, but not limited to, server computers, web servers, personal computers, mobile computing devices, smart phones, and/or other devices. As such, various configurations of the concepts and technologies disclosed herein enable any device configured to access the distributed computing environment 900 to utilize the functionality described herein for optimizing aesthetics and/or legibility of displayed text, among other aspects. In one specific example, as summarized above, techniques described herein may be implemented, at least in part, by the web browser application 810 of FIGURE 8, which works in conjunction with the application servers 908 of FIGURE 9.

Turning now to FIGURE 10, an illustrative computing device architecture 1000 for a computing device that is capable of executing various software components described herein for optimizing aesthetics and/or legibility of displayed text. The computing device architecture 1000 is applicable to computing devices that facilitate mobile computing due, in part, to form factor, wireless connectivity, and/or battery-powered operation. In some configurations, the computing devices include, but are not limited to, mobile telephones, tablet devices, slate devices, portable video game devices, and the like. The computing device architecture 1000 is applicable to any of the clients 906 shown in FIGURE 9. Moreover, aspects of the computing device architecture 1000 may be applicable to traditional desktop computers, portable computers (e.g., laptops, notebooks, ultra-portables, and netbooks), server computers, and other computer systems, such as described herein with reference to FIGURE 8. For example, the single touch and multi-touch aspects disclosed herein below may be applied to desktop computers that utilize a touchscreen or some other touch-enabled device, such as a touch-enabled track pad or touch-enabled mouse.

The computing device architecture 1000 illustrated in FIGURE 10 includes a processor 1002, memory components 1004, network connectivity components 1006, sensor components 1008, input/output components 1010, and power components 1012. In the illustrated configuration, the processor 1002 is in communication with the memory components 1004, the network connectivity components 1006, the sensor components 1008, the input/output ("I/O") components 1010, and the power components 1012. Although no connections are shown between the individuals components illustrated in FIGURE 10, the components can interact to carry out device functions. In some configurations, the components are arranged so as to communicate via one or more busses (not shown).

The processor 1002 includes a central processing unit ("CPU") configured to process data, execute computer-executable instructions of one or more application programs, and communicate with other components of the computing device architecture 1000 in order to perform various functionality described herein. The processor 1002 may be utilized to execute aspects of the software components presented herein and, particularly, those that utilize, at least in part, a touch-enabled input.

In some configurations, the processor 1002 includes a graphics processing unit ("GPU") configured to accelerate operations performed by the CPU, including, but not limited to, operations performed by executing general-purpose scientific and/or engineering computing applications, as well as graphics-intensive computing applications such as high resolution video (e.g., 720P, 1080P, and higher resolution), video games, three-dimensional ("3D") modeling applications, and the like. In some configurations, the processor 1002 is configured to communicate with a discrete GPU (not shown). In any case, the CPU and GPU may be configured in accordance with a co-processing CPU/GPU computing model, wherein the sequential part of an application executes on the CPU and the computationally-intensive part is accelerated by the GPU.

In some configurations, the processor 1002 is, or is included in, a system-on-chip ("SoC") along with one or more of the other components described herein below. For example, the SoC may include the processor 1002, a GPU, one or more of the network connectivity components 1006, and one or more of the sensor components 1008. In some configurations, the processor 1002 is fabricated, in part, utilizing a package-on-package ("PoP") integrated circuit packaging technique. The processor 1002 may be a single core or multi-core processor.

The processor 1002 may be created in accordance with an ARM architecture, available for license from ARM HOLDINGS of Cambridge, United Kingdom. Alternatively, the processor 1002 may be created in accordance with an x86 architecture, such as is available from INTEL CORPORATION of Mountain View, California and others. In some configurations, the processor 1002 is a SNAPDRAGON SoC, available from QUALCOMM of San Diego, California, a TEGRA SoC, available from NVIDIA of Santa Clara, California, a HUMMINGBIRD SoC, available from SAMSUNG of Seoul, South Korea, an Open Multimedia Application Platform ("OMAP") SoC, available from TEXAS INSTRUMENTS of Dallas, Texas, a customized version of any of the above SoCs, or a proprietary SoC.

The memory components 1004 include a random access memory ("RAM") 1014, a read-only memory ("ROM") 1016, an integrated storage memory ("integrated storage") 1018, and a removable storage memory ("removable storage") 1020. In some configurations, the RAM 1014 or a portion thereof, the ROM 1018 or a portion thereof, and/or some combination the RAM 1014 and the ROM 1018 is integrated in the processor 1002. In some configurations, the ROM 1018 is configured to store a firmware, an operating system or a portion thereof (e.g., operating system kernel), and/or a bootloader to load an operating system kernel from the integrated storage 1018 and/or the removable storage 1020.

The integrated storage 1018 can include a solid-state memory, a hard disk, or a combination of solid-state memory and a hard disk. The integrated storage 1018 may be soldered or otherwise connected to a logic board upon which the processor 1002 and other components described herein also may be connected. As such, the integrated storage 1018 is integrated in the computing device. The integrated storage 1018 is configured to store an operating system or portions thereof, application programs, data, and other software components described herein.

The removable storage 1020 can include a solid-state memory, a hard disk, or a combination of solid-state memory and a hard disk. In some configurations, the removable storage 1020 is provided in lieu of the integrated storage 1018. In other configurations, the removable storage 1020 is provided as additional optional storage. In some configurations, the removable storage 1020 is logically combined with the integrated storage 1018 such that the total available storage is made available as a total combined storage capacity. In some configurations, the total combined capacity of the integrated storage 1018 and the removable storage 1020 is shown to a user instead of separate storage capacities for the integrated storage 1018 and the removable storage 1020.

The removable storage 1020 is configured to be inserted into a removable storage memory slot (not shown) or other mechanism by which the removable storage 1020 is inserted and secured to facilitate a connection over which the removable storage 1020 can communicate with other components of the computing device, such as the processor 1002. The removable storage 1020 may be embodied in various memory card formats including, but not limited to, PC card, CompactFlash card, memory stick, secure digital ("SD"), miniSD, microSD, universal integrated circuit card ("UICC") (e.g., a subscriber identity module ("SIM") or universal SIM ("USIM")), a proprietary format, or the like.

It can be understood that one or more of the memory components 1004 can store an operating system. According to various configurations, the operating system includes, but is not limited to, SYMBIAN OS from SYMBIAN LIMITED, WINDOWS MOBILE OS from Microsoft Corporation of Redmond, Washington, WINDOWS PHONE OS from Microsoft Corporation, WINDOWS from Microsoft Corporation, PALM WEBOS from Hewlett-Packard Company of Palo Alto, California, BLACKBERRY OS from Research In Motion Limited of Waterloo, Ontario, Canada, IOS from Apple Inc. of Cupertino, California, and ANDROID OS from Google Inc. of Mountain View, California. Other operating systems are contemplated.

The network connectivity components 1006 include a wireless wide area network component ("WWAN component") 1022, a wireless local area network component ("WLAN component") 1024, and a wireless personal area network component ("WPAN component") 1026. The network connectivity components 1006 facilitate communications to and from the network 1056 or another network, which may be a WWAN, a WLAN, or a WPAN. Although only the network 1056 is illustrated, the network connectivity components 1006 may facilitate simultaneous communication with multiple networks, including the network 904 of FIGURE 9. For example, the network connectivity components 1006 may facilitate simultaneous communications with multiple networks via one or more of a WWAN, a WLAN, or a WPAN.

The network 1056 may be or may include a WWAN, such as a mobile telecommunications network utilizing one or more mobile telecommunications technologies to provide voice and/or data services to a computing device utilizing the computing device architecture 1000 via the WWAN component 1022. The mobile telecommunications technologies can include, but are not limited to, Global System for Mobile communications ("GSM"), Code Division Multiple Access ("CDMA") ONE, CDMA2000, Universal Mobile Telecommunications System ("UMTS"), Long Term Evolution ("LTE"), and Worldwide Interoperability for Microwave Access ("WiMAX"). Moreover, the network 1056 may utilize various channel access methods (which may or may not be used by the aforementioned standards) including, but not limited to, Time Division Multiple Access ("TDMA"), Frequency Division Multiple Access ("FDMA"), CDMA, wideband CDMA ("W-CDMA"), Orthogonal Frequency Division Multiplexing ("OFDM"), Space Division Multiple Access ("SDMA"), and the like. Data communications may be provided using General Packet Radio Service ("GPRS"), Enhanced Data rates for Global Evolution ("EDGE"), the High-Speed Packet Access ("HSPA") protocol family including High-Speed Downlink Packet Access ("HSDPA"), Enhanced Uplink ("EUL") or otherwise termed High-Speed Uplink Packet Access ("HSUPA"), Evolved HSPA ("HSPA+"), LTE, and various other current and future wireless data access standards. The network 104 may be configured to provide voice and/or data communications with any combination of the above technologies. The network 1056 may be configured to or adapted to provide voice and/or data communications in accordance with future generation technologies.

In some configurations, the WWAN component 1022 is configured to provide dual- multi-mode connectivity to the network 1056. For example, the WWAN component 1022 may be configured to provide connectivity to the network 1056, wherein the network 1056 provides service via GSM and UMTS technologies, or via some other combination of technologies. Alternatively, multiple WWAN components 1022 may be utilized to perform such functionality, and/or provide additional functionality to support other non-compatible technologies (i.e., incapable of being supported by a single WWAN component). The WWAN component 1022 may facilitate similar connectivity to multiple networks (e.g., a UMTS network and an LTE network).

The network 1056 may be a WLAN operating in accordance with one or more Institute of Electrical and Electronic Engineers ("IEEE") 802.11 standards, such as IEEE 802.11a, 802.11b, 802.11g, 802.11n, and/or future 802.11 standard (referred to herein collectively as WI-FI). Draft 802.11 standards are also contemplated. In some configurations, the WLAN is implemented utilizing one or more wireless WI-FI access points. In some configurations, one or more of the wireless WI-FI access points are another computing device with connectivity to a WWAN that are functioning as a WI-FI hotspot. The WLAN component 1024 is configured to connect to the network 1056 via the WI-FI access points. Such connections may be secured via various encryption technologies including, but not limited, WI-FI Protected Access ("WPA"), WPA2, Wired Equivalent Privacy ("WEP"), and the like.

The network 1056 may be a WPAN operating in accordance with Infrared Data Association ("IrDA"), BLUETOOTH, wireless Universal Serial Bus ("USB"), Z-Wave, ZIGBEE, or some other short-range wireless technology. In some configurations, the WPAN component 1026 is configured to facilitate communications with other devices, such as peripherals, computers, or other computing devices via the WPAN.

The sensor components 1008 include a magnetometer 1028, an ambient light sensor 1030, a proximity sensor 1032, an accelerometer 1034, a gyroscope 1036, and a Global Positioning System sensor ("GPS sensor") 1038. It is contemplated that other sensors, such as, but not limited to, temperature sensors or shock detection sensors, also may be incorporated in the computing device architecture 1000.

The magnetometer 1028 is configured to measure the strength and direction of a magnetic field. In some configurations the magnetometer 1028 provides measurements to a compass application program stored within one of the memory components 1004 in order to provide a user with accurate directions in a frame of reference including the cardinal directions, north, south, east, and west. Similar measurements may be provided to a navigation application program that includes a compass component. Other uses of measurements obtained by the magnetometer 1028 are contemplated.

The ambient light sensor 1030 is configured to measure ambient light. In some configurations, the ambient light sensor 1030 provides measurements to an application program stored within one the memory components 1004 in order to automatically adjust the brightness of a display (described below) to compensate for low-light and high-light environments. Other uses of measurements obtained by the ambient light sensor 1030 are contemplated.

The proximity sensor 1032 is configured to detect the presence of an object or thing in proximity to the computing device without direct contact. In some configurations, the proximity sensor 1032 detects the presence of a user's body (e.g., the user's face) and provides this information to an application program stored within one of the memory components 1004 that utilizes the proximity information to enable or disable some functionality of the computing device. For example, a telephone application program may automatically disable a touchscreen (described below) in response to receiving the proximity information so that the user's face does not inadvertently end a call or enable/disable other functionality within the telephone application program during the call. Other uses of proximity as detected by the proximity sensor 1028 are contemplated.

The accelerometer 1034 is configured to measure proper acceleration. In some configurations, output from the accelerometer 1034 is used by an application program as an input mechanism to control some functionality of the application program. For example, the application program may be a video game in which a character, a portion thereof, or an object is moved or otherwise manipulated in response to input received via the accelerometer 1034. In some configurations, output from the accelerometer 1034 is provided to an application program for use in switching between landscape and portrait modes, calculating coordinate acceleration, or detecting a fall. Other uses of the accelerometer 1034 are contemplated.

The gyroscope 1036 is configured to measure and maintain orientation. In some configurations, output from the gyroscope 1036 is used by an application program as an input mechanism to control some functionality of the application program. For example, the gyroscope 1036 can be used for accurate recognition of movement within a 3D environment of a video game application or some other application. In some configurations, an application program utilizes output from the gyroscope 1036 and the accelerometer 1034 to enhance control of some functionality of the application program. Other uses of the gyroscope 1036 are contemplated.

The GPS sensor 1038 is configured to receive signals from GPS satellites for use in calculating a location. The location calculated by the GPS sensor 1038 may be used by any application program that requires or benefits from location information. For example, the location calculated by the GPS sensor 1038 may be used with a navigation application program to provide directions from the location to a destination or directions from the destination to the location. Moreover, the GPS sensor 1038 may be used to provide location information to an external location-based service, such as E911 service. The GPS sensor 1038 may obtain location information generated via WI-FI, WIMAX, and/or cellular triangulation techniques utilizing one or more of the network connectivity components 1006 to aid the GPS sensor 1038 in obtaining a location fix. The GPS sensor 1038 may also be used in Assisted GPS ("A-GPS") systems.

The I/O components 1010 include a display 1040, a touchscreen 1042, a data I/O interface component ("data I/O") 1044, an audio I/O interface component ("audio I/O") 1046, a video I/O interface component ("video I/O") 1048, and a camera 1050. In some configurations, the display 1040 and the touchscreen 1042 are combined. In some configurations two or more of the data I/O component 1044, the audio I/O component 1046, and the video I/O component 1048 are combined. The I/O components 1010 may include discrete processors configured to support the various interface described below, or may include processing functionality built-in to the processor 1002.

The display 1040 is an output device configured to present information in a visual form. In particular, the display 1040 may present graphical user interface ("GUI") elements, text, images, video, notifications, virtual buttons, virtual keyboards, messaging data, Internet content, device status, time, date, calendar data, preferences, map information, location information, and any other information that is capable of being presented in a visual form. In some configurations, the display 1040 is a liquid crystal display ("LCD") utilizing any active or passive matrix technology and any backlighting technology (if used). In some configurations, the display 1040 is an organic light emitting diode ("OLED") display. Other display types are contemplated.

The touchscreen 1042, also referred to herein as a "touch-enabled screen," is an input device configured to detect the presence and location of a touch. The touchscreen 1042 may be a resistive touchscreen, a capacitive touchscreen, a surface acoustic wave touchscreen, an infrared touchscreen, an optical imaging touchscreen, a dispersive signal touchscreen, an acoustic pulse recognition touchscreen, or may utilize any other touchscreen technology. In some configurations, the touchscreen 1042 is incorporated on top of the display 1040 as a transparent layer to enable a user to use one or more touches to interact with objects or other information presented on the display 1040. In other configurations, the touchscreen 1042 is a touch pad incorporated on a surface of the computing device that does not include the display 1040. For example, the computing device may have a touchscreen incorporated on top of the display 1040 and a touch pad on a surface opposite the display 1040.

In some configurations, the touchscreen 1042 is a single-touch touchscreen. In other configurations, the touchscreen 1042 is a multi-touch touchscreen. In some configurations, the touchscreen 1042 is configured to detect discrete touches, single touch gestures, and/or multi-touch gestures. These are collectively referred to herein as gestures for convenience. Several gestures will now be described. It should be understood that these gestures are illustrative and are not intended to limit the scope of the appended claims. Moreover, the described gestures, additional gestures, and/or alternative gestures may be implemented in software for use with the touchscreen 1042. As such, a developer may create gestures that are specific to a particular application program.

In some configurations, the touchscreen 1042 supports a tap gesture in which a user taps the touchscreen 1042 once on an item presented on the display 1040. The tap gesture may be used for various reasons including, but not limited to, opening or launching whatever the user taps. In some configurations, the touchscreen 1042 supports a double tap gesture in which a user taps the touchscreen 1042 twice on an item presented on the display 1040. The double tap gesture may be used for various reasons including, but not limited to, zooming in or zooming out in stages. In some configurations, the touchscreen 1042 supports a tap and hold gesture in which a user taps the touchscreen 1042 and maintains contact for at least a pre-defined time. The tap and hold gesture may be used for various reasons including, but not limited to, opening a context-specific menu.

In some configurations, the touchscreen 1042 supports a pan gesture in which a user places a finger on the touchscreen 1042 and maintains contact with the touchscreen 1042 while moving the finger on the touchscreen 1042. The pan gesture may be used for various reasons including, but not limited to, moving through screens, images, or menus at a controlled rate. Multiple finger pan gestures are also contemplated. In some configurations, the touchscreen 1042 supports a flick gesture in which a user swipes a finger in the direction the user wants the screen to move. The flick gesture may be used for various reasons including, but not limited to, scrolling horizontally or vertically through menus or pages. In some configurations, the touchscreen 1042 supports a pinch and stretch gesture in which a user makes a pinching motion with two fingers (e.g., thumb and forefinger) on the touchscreen 1042 or moves the two fingers apart. The pinch and stretch gesture may be used for various reasons including, but not limited to, zooming gradually in or out of a website, map, or picture.

Although the above gestures have been described with reference to the use one or more fingers for performing the gestures, other appendages such as toes or objects such as styluses may be used to interact with the touchscreen 1042. As such, the above gestures should be understood as being illustrative and should not be construed as being limiting in any way.

The data I/O interface component 1044 is configured to facilitate input of data to the computing device and output of data from the computing device. In some configurations, the data I/O interface component 1044 includes a connector configured to provide wired connectivity between the computing device and a computer system, for example, for synchronization operation purposes. The connector may be a proprietary connector or a standardized connector such as USB, micro-USB, mini-USB, or the like. In some configurations, the connector is a dock connector for docking the computing device with another device such as a docking station, audio device (e.g., a digital music player), or video device.

The audio I/O interface component 1046 is configured to provide audio input and/or output capabilities to the computing device. In some configurations, the audio I/O interface component 1044 includes a microphone configured to collect audio signals. In some configurations, the audio I/O interface component 1044 includes a headphone jack configured to provide connectivity for headphones or other external speakers. In some configurations, the audio I/O interface component 1046 includes a speaker for the output of audio signals. In some configurations, the audio I/O interface component 1044 includes an optical audio cable out.

The video I/O interface component 1048 is configured to provide video input and/or output capabilities to the computing device. In some configurations, the video I/O interface component 1048 includes a video connector configured to receive video as input from another device (e.g., a video media player such as a DVD or BLURAY player) or send video as output to another device (e.g., a monitor, a television, or some other external display). In some configurations, the video I/O interface component 1048 includes a High-Definition Multimedia Interface ("HDMI"), mini-HDMI, micro-HDMI, DisplayPort, or proprietary connector to input/output video content. In some configurations, the video I/O interface component 1048 or portions thereof is combined with the audio I/O interface component 1046 or portions thereof.

The camera 1050 can be configured to capture still images and/or video. The camera 1050 may utilize a charge coupled device ("CCD") or a complementary metal oxide semiconductor ("CMOS") image sensor to capture images. In some configurations, the camera 1050 includes a flash to aid in taking pictures in low-light environments. Settings for the camera 1050 may be implemented as hardware or software buttons.

Although not illustrated, one or more hardware buttons may also be included in the computing device architecture 1000. The hardware buttons may be used for controlling some operational aspect of the computing device. The hardware buttons may be dedicated buttons or multi-use buttons. The hardware buttons may be mechanical or sensor-based.

The illustrated power components 1012 include one or more batteries 1052, which can be connected to a battery gauge 1054. The batteries 1052 may be rechargeable or disposable. Rechargeable battery types include, but are not limited to, lithium polymer, lithium ion, nickel cadmium, and nickel metal hydride. Each of the batteries 1052 may be made of one or more cells.

The battery gauge 1054 can be configured to measure battery parameters such as current, voltage, and temperature. In some configurations, the battery gauge 1054 is configured to measure the effect of a battery's discharge rate, temperature, age and other factors to predict remaining life within a certain percentage of error. In some configurations, the battery gauge 1054 provides measurements to an application program that is configured to utilize the measurements to present useful power management data to a user. Power management data may include one or more of a percentage of battery used, a percentage of battery remaining, a battery condition, a remaining time, a remaining capacity (e.g., in watt hours), a current draw, and a voltage.

The power components 1012 may also include a power connector, which may be combined with one or more of the aforementioned I/O components 1010. The power components 1012 may interface with an external power system or charging equipment via a power I/O component, not shown.

The disclosure presented herein may be considered in view of the following clauses.
Clause 1: A computer-implemented method comprising computer-implemented operations for: obtaining input data (110) comprising an image (302), text (301) and data that defines a relationship between the text (301) and the image (302); determining a legibility score associated with a transformation (300) of the input data; determining if the legibility score for the transformation (300) meets a threshold; and if it is determined that the legibility score for the transformation (300) does not meet the threshold, applying one or more treatments to the input data to process at least one modification to the relationship between the text (301) and the image (302), generating a plurality of models (114), wherein individual models (114) of the plurality of models (114) define the at least one modification to the relationship between the text (301) and the image (302), determining a legibility score for at least one individual model (114) of the plurality of models (114), determining if the legibility score for the at least one individual model (114) of the plurality of models (114) meets at least one threshold, and if it is determined that the legibility score for the at least one individual model (114) of the plurality of models (114) meets at least one threshold, presenting the at least one individual model (114) of the plurality of models (114).
Clause 2: The example of clause 1, wherein determining the legibility score associated with the transformation of the input data comprises: determining a dimension of at least one super pixel; determining an aggregate luminance level for the text based on the at least one super pixel; determining an aggregate luminance level for the image based on the least one super pixel; and determining an aggregate contrast ratio between the text and the image based on the an aggregate luminance level for the text and the aggregate luminance level for the image, wherein the legibility score for the transformation is based on the aggregate contrast ratio.
Clause 3: The example of clauses 1 and 2, wherein the size of the super pixel is based on a height of at least one character in the text.
Clause 4: The example of clauses 1-3, wherein the size of the super pixel is based on a stroke width associated with the text.
Clause 5: The example of clauses 1-4, wherein the legibility score associated with the transformation of the input data is based, at least in part, on a font size associated with the text.
Clause 6: The example of clauses 1-5, wherein applying one or more treatments to the input data comprises applying a global brightness or a global color modification to the image.
Clause 7: The example of clauses 1-6, wherein applying one or more treatments to the input data comprises providing a drop shadow positioned around the text.
Clause 8: A computer (800, 1000), comprising: a processor (802, 1002); and a computer-readable storage medium (804, 1004) in communication with the processor (802, 1002), the computer-readable storage medium (804, 1004) having computer-executable instructions stored thereupon which, when executed by the processor (802, 1002), cause the computer (800, 1000) to obtain input data (110) comprising an image (302), text (301), and data defining a relationship between the text (301) and the image (302), apply one or more treatments to the input data (110) to modify at least one relationship between the text (301) and the image (302), generate a plurality of models (114), wherein individual models (114) of the plurality of models (114) define the at least one modification to the relationship between the text (301) and the image (302), determine a legibility score for at least one individual model (114) of the plurality of models (114), determine if the legibility score for the at least one individual model (114) of the plurality of models (114) meets a threshold, and present the at least one individual model (114) of the plurality of models (114) if it is determined that the legibility score for the at least one individual model (114) of the plurality of models (114) meets at least one threshold.
Clause 9: The computer of cause 8, wherein determining the legibility score associated with the transformation of the input data comprises: determining a dimension of at least one super pixel; determining an aggregate luminance level for the text based on the at least one super pixel; determining an aggregate luminance level for the image based on the least one super pixel; and determining an aggregate contrast ratio between the text and the image based on the aggregate luminance level for the text and the aggregate luminance level for the image, wherein the legibility score for the transformation is based on the aggregate contrast ratio.
Clause 10: The computer of clauses 8-9, wherein the size of the super pixel is based on a height of at least one character in the text.
Clause 11: The computer of clauses 8-10, wherein the size of the super pixel is based on a stroke width associated with the text.
Clause 12: The computer of clauses 8-11, wherein the legibility score associated with the transformation of the input data is based on a font size associated with the text.
Clause 13: The computer of clauses 8-12, wherein applying one or more treatments to the input data comprises applying a global brightness or a global color modification to the image.
Clause 14: A computer-readable storage medium (804, 1004) having computer-executable instructions stored thereupon which, when executed by a computer (800, 1000), cause the computer (800, 1000) to: obtain input data (110) comprising an image (302), text (301), and data defining a relationship between the text (301) and the image (302); apply one or more treatments to the input data (110) to modify at least one relationship between the text (301) and the image (302); generate a plurality of models (114), wherein individual models (114) of the plurality of models (114) define the at least one modification to the relationship between the text (301) and the image (302); determine a legibility score for at least one individual model of the plurality of models (114); determine if the legibility score for the at least one individual model (114) of the plurality of models (114) meets a threshold; and present the at least one individual model (114) of the plurality of models (114) if it is determined that the legibility score for the at least one individual model (114) of the plurality of models (114) meets at least one threshold.
Clause 15: The computer-readable storage medium of clause 14, wherein the size of the super pixel is based on a height of at least one character in the text.
Clause 16: The computer-readable storage medium of clauses 14-15, wherein the size of the super pixel is based on a stroke width associated with the text.
Clause 17: The computer-readable storage medium of clauses 14-16, wherein the legibility score associated with the transformation of the input data is based, at least in part, on a font size associated with the text.
Clause 18: The computer-readable storage medium of clauses 14-17, wherein applying one or more treatments to the input data comprises applying a global brightness or a global color modification to the image.
Clause 19: The computer-readable storage medium of clauses 14-18, wherein applying one or more treatments to the input data comprises providing a drop shadow positioned around the text.
Clause 20: The computer-readable storage medium of clauses 14-19, wherein applying one or more treatments to the input data comprises providing a backdrop positioned around the text.

Based on the foregoing, it should be appreciated that concepts and technologies have been disclosed herein for optimizing the legibility of displayed text. Although the subject matter presented herein has been described in language specific to computer structural features, methodological and transformative acts, specific computing machinery, and computer readable media, it is to be understood that the invention defined in the appended claims is not necessarily limited to the specific features, acts, or media described herein. Rather, the specific features, acts and mediums are disclosed as example forms of implementing the claims.

The subject matter described above is provided by way of illustration only and should not be construed as limiting. Various modifications and changes may be made to the subject matter described herein without following the example configurations and applications illustrated and described, and without departing from the scope of the present invention, which is set forth in the following claims.

## Claims

1. A computer-implemented method for enhancing user interaction with a computing device, the computer-implemented method comprising:
obtaining (202), at the computing device, input data comprising an image, text and data that defines a relationship between the text and the image;
determining (204), at the computing device, a legibility score associated with a transformation of the input data;
determining (206), at the computing device, if the legibility score for the transformation meets a threshold; and
if it is determined that the legibility score for the transformation does not meet the threshold,
applying one or more treatments to the input data to process at least one modification to the relationship between the text and the image,
generating (208) a plurality of models, wherein individual models of the plurality of models define the at least one modification to the relationship between the text and the image,
determining (210) a legibility score for at least one individual model of the plurality of models,
determining (214) if the legibility score for the at least one individual model of the plurality of models meets at least one threshold, and
if it is determined that the legibility score for the at least one individual model of the plurality of models meets at least one threshold, presenting (216) the at least one individual model of the plurality of models,
wherein determining the legibility score associated with the transformation of the input data comprises:
determining (252) a dimension of at least one defined area, wherein the dimension of the at least one defined area is one of less than half of a stroke thickness of one or more characters of the text and less than half of a height of one or more characters of the text;
determining (254) an aggregate luminance level for the text based on the at least one defined area;
determining (254) an aggregate luminance level for the image based on the least one defined area; and
determining (256) an aggregate contrast ratio between the text and the image based on the aggregate luminance level for the text and the aggregate luminance level for the image, wherein the legibility score for the transformation is based on the aggregate contrast ratio.

2. The computer-implemented method of claim 1, wherein the legibility score associated with the transformation of the input data is based, at least in part, on a font size associated with the text.

3. The computer-implemented method of claim 1, wherein applying one or more treatments to the input data comprises applying a global brightness or a global color modification to the image.

4. The computer-implemented method of claim 1, wherein applying one or more treatments to the input data comprises providing a drop shadow positioned around the text.

5. A computer, comprising:
a processor (1002); and
a computer-readable storage medium (1004) in communication with the processor, the computer-readable storage medium having computer-executable instructions stored thereupon which, when executed by the processor, cause the computer to
obtain (202) input data comprising an image, text, and data defining a relationship between the text and the image,
apply one or more treatments to the input data to modify at least one relationship between the text and the image,
generate (208) a plurality of models, wherein individual models of the plurality of models define the at least one modification to the relationship between the text and the image,
determine (210) a legibility score for at least one individual model of the plurality of models,
determine (214) if the legibility score for the at least one individual model of the plurality of models meets a threshold, and
present (216) the at least one individual model of the plurality of models if it is determined that the legibility score for the at least one individual model of the plurality of models meets at least one threshold,
wherein determining the legibility score associated with the transformation of the input data comprises:
determining (252) a dimension of at least one defined area, wherein the dimension of the at least one defined area is one of less than half of a stroke thickness of one or more characters of the text and less than half of a height of one or more characters of the text;
determining (254) an aggregate luminance level for the text based on the at least one defined area;
determining (254) an aggregate luminance level for the image based on the least one defined area; and
determining (256) an aggregate contrast ratio between the text and the image based on the aggregate luminance level for the text and the aggregate luminance level for the image, wherein the legibility score for the transformation is based on the aggregate contrast ratio.

6. The computer of claim 5, wherein the legibility score associated with the transformation of the input data is based on a font size associated with the text.

7. The computer of claim 5, wherein applying one or more treatments to the input data comprises applying a global brightness or a global color modification to the image.

## Patentansprüche

1. Computerimplementiertes Verfahren zur Verbesserung der Nutzer-Interaktion mit einem Computergerät, wobei das computerimplementierte Verfahren umfasst:
Abrufen (202), am Computergerät, von Eingabedaten, die ein Bild, Text und Daten, die eine Beziehung zwischen dem Text und dem Bild definieren, umfassen;
Ermitteln (204), am Computergerät, eines mit einer Umwandlung der Eingabedaten verbundenen Lesbarkeitswertes;
Ermitteln (206), am Computergerät, ob der Lesbarkeitswert für die Umwandlung einem Schwellenwert entspricht; und
wenn ermittelt wird, dass der Lesbarkeitswert für die Umwandlung dem Schwellenwert nicht entspricht;
Anwenden einer oder mehrerer Behandlungen auf die Eingabedaten, um mindestens eine Modifikation der Beziehung zwischen dem Text und dem Bild zu verarbeiten,
Erzeugen (208) einer Vielzahl an Modellen, wobei einzelne Modelle aus der Vielzahl an Modellen die mindestens eine Modifikation der Beziehung zwischen dem Text und dem Bild definieren,
Ermitteln (210) eines Lesbarkeitswerts für mindestens ein einzelnes Modell aus der Vielzahl an Modellen,
Ermitteln (214), ob der Lesbarkeitswert für das mindestens eine einzelne Modell aus der Vielzahl an Modellen mindestens einem Schwellenwert entspricht, und
wenn ermittelt wird, dass der Lesbarkeitswert für das mindestens eine einzelne Model aus der Vielzahl an Modellen mindestens einem Schwellenwert entspricht, Präsentieren (216) des mindestens einen einzelnen Modells aus der Vielzahl an Modellen,
wobei das Ermitteln des mit der Umwandlung der Eingabedaten verbundenen Lesbarkeitswertes umfasst:
Ermitteln (252) einer Abmessung von mindestens einem definierten Bereich, wobei die Abmessung des mindestens einen definierten Bereichs eine ist, die kleiner als die Hälfte einer Strichstärke von einem oder mehreren Zeichen des Textes und kleiner als die Hälfte einer Höhe von einem oder mehreren Zeichen des Textes ist;
Ermitteln (254) eines Grades der Gesamtleuchtdichte für den Text, basierend auf den mindestens einen definierten Bereich;
Ermitteln (254) eines Grades der Gesamtleuchtdichte für das Bild, basierend auf den mindestens einen definierten Bereich; und
Ermitteln (256) eines Gesamtkontrastverhältnisses zwischen dem Text und dem Bild, basierend auf dem Grad der Gesamtleuchtdichte für den Text und dem Grad der Gesamtleuchtdichte für das Bild, wobei der Lesbarkeitswert für die Umwandlung auf dem Gesamtkontrastverhältnis basiert.

2. Computerimplementiertes Verfahren nach Anspruch 1, wobei der mit der Umwandlung der Eingabedaten verbundene Lesbarkeitswert mindestens teilweise auf einer mit dem Text verbundenen Fontgröße basiert.

3. Computerimplementiertes Verfahren nach Anspruch 1, wobei das Anwenden einer oder mehrerer Behandlungen auf die Eingabedaten das Anwenden einer globalen Helligkeits- oder einer globalen Farbmodifikation auf das Bild umfasst.

4. Computerimplementiertes Verfahren nach Anspruch 1, wobei das Anwenden einer oder mehrerer Behandlungen auf die Eingabedaten das Bereitstellen eines Schlagschattens, der um den Text herum positioniert ist, umfasst.

5. Computer, umfassend:
einen Prozessor (1002); und
ein mit dem Prozessor kommunizierendes computerlesbares Speichermedium (1004), wobei das computerlesbare Speichermedium darauf gespeicherte computerausführbare Anweisungen aufweist, die, wenn sie von dem Prozessor ausgeführt werden, den Computer dazu veranlassen:
die Eingabedaten, die ein Bild, Text und Daten umfassen, die eine Beziehung zwischen dem Text und dem Bild definieren, abzurufen (202),
eine oder mehrere Behandlungen auf die Eingabedaten anzuwenden, um mindestens eine Beziehung zwischen dem Text und dem Bild zu modifizieren,
eine Vielzahl an Modellen zu erzeugen (208), wobei einzelne Modelle aus der Vielzahl an Modellen die mindestens eine Modifikation der Beziehung zwischen dem Text und dem Bild definieren,
einen Lesbarkeitswert für mindestens ein einzelnes Modell aus der Vielzahl an Modellen zu ermitteln (210),
zu ermitteln (214), ob der Lesbarkeitswert für das mindestens eine einzelne Modell aus der Vielzahl an Modellen einem Schwellenwert entspricht, und
das mindestens eine einzelne Modell aus der Vielzahl an Modellen zu präsentieren (216), wenn ermittelt wird, dass der Lesbarkeitswert für das mindestens eine einzelne Modell aus der Vielzahl an Modellen, dem mindestens einen Schwellenwert entspricht,
wobei das Ermitteln des mit der Umwandlung der Eingabedaten verbundenen Lesbarkeitswertes umfasst:
Ermitteln (252) einer Abmessung von mindestens einem definierten Bereich, wobei die Abmessung des mindestens einen definierten Bereichs eine ist, die kleiner als die Hälfte einer Strichstärke von einem oder mehreren Zeichen des Textes und kleiner als die Hälfte einer Höhe von einem oder mehreren Zeichen des Textes ist;
Ermitteln (254) eines Grades der Gesamtleuchtdichte für den Text, basierend auf den mindestens einen definierten Bereich;
Ermitteln (254) eines Grades der Gesamtleuchtdichte für das Bild, basierend auf den mindestens einen definierten Bereich; und
Ermitteln (256) eines Gesamtkontrastverhältnisses zwischen dem Text und dem Bild, basierend auf dem Grad der Gesamtleuchtdichte für den Text und dem Grad der Gesamtleuchtdichte für das Bild, wobei der Lesbarkeitswert für die Umwandlung auf dem Gesamtkontrastverhältnis basiert.

6. Computer nach Anspruch 5, wobei der mit der Umwandlung der Eingabedaten verbundene Lesbarkeitswert auf einer mit dem Text verbundenen Fontgröße basiert.

7. Computer nach Anspruch 5, wobei das Anwenden einer oder mehrerer Behandlungen auf die Eingabedaten das Anwenden einer globalen Helligkeits- oder einer globalen Farbmodifikation auf das Bild umfasst.

## Revendications

1. Procédé mis en oeuvre sur ordinateur dans le but d'améliorer l'interaction de l'utilisateur avec un dispositif informatique, le procédé mis en oeuvre sur ordinateur comprenant :
la récupération (202), au niveau du dispositif informatique, de données d'entrée comprenant une image, du texte et des données qui définissent une relation entre le texte et l'image,
la détermination (204), au niveau du dispositif informatique, d'une note de lisibilité associée à une transformation des données d'entrée,
la détermination (206), au niveau du dispositif informatique, de ce que la note de lisibilité pour la transformation satisfait à un seuil, et
s'il est déterminé que la note de lisibilité pour la transformation ne satisfait pas au seuil,
l'application d'un ou plusieurs traitements sur les données d'entrée pour traiter au moins une modification à la relation entre le texte et l'image,
la génération (208) d'une pluralité de modèles, des modèles individuels de la pluralité de modèles définissant la ou les modifications à la relation entre le texte et l'image,
la détermination (210) d'une note de lisibilité pour au moins un modèle individuel de la pluralité de modèles,
la détermination (214) de ce que la note de lisibilité pour le ou les modèles individuels de la pluralité de modèles satisfait à au moins un seuil, et
s'il est déterminé que la note de lisibilité pour le ou les modèles individuels de la pluralité de modèles satisfait à au moins un seuil, la présentation (216) du ou des modèles individuels de la pluralité de modèles,
dans lequel la détermination de la note de lisibilité associée à la transformation des données d'entrée comprend :
la détermination (252) d'une dimension d'au moins une zone définie, la dimension de la ou des zones définies représentant une parmi moins de la moitié d'une épaisseur de trait de un ou plusieurs caractères du texte et moins de la moitié d'un huitième de la hauteur d'un ou plusieurs caractères du texte,
la détermination (254) d'un niveau de luminance agrégé pour le texte sur la base de la ou des zones définies,
la détermination (254) d'un niveau de luminance agrégé pour l'image sur la base de la ou des zones définies, et
la détermination (256) d'un rapport de contrastes agrégé entre le texte et l'image sur la base du niveau de luminance agrégé pour le texte et du niveau de luminance agrégé pour l'image, la note de lisibilité pour la transformation étant fondée sur le rapport de contrastes agrégé.

2. Procédé mis en oeuvre sur ordinateur selon la revendication 1, dans lequel la note de lisibilité associée à la transformation des données d'entrée est fondée, au moins en partie, sur une taille de police associée au texte.

3. Procédé mis en oeuvre sur ordinateur selon la revendication 1, dans lequel l'application d'un ou plusieurs traitements sur les données d'entrée comprend l'application à l'image d'une modification de luminosité globale ou de couleur globale.

4. Procédé mis en oeuvre sur ordinateur selon la revendication 1, dans lequel l'application d'un ou plusieurs traitements sur les données d'entrée comprend l'utilisation d'une ombre portée positionnée autour du texte.

5. Ordinateur comprenant :
un processeur (1002), et
un support de stockage pouvant être lu par ordinateur (1004) en communication avec le processeur, le support de stockage pouvant être lu par ordinateur comportant, stockées, des instructions exécutables par ordinateur qui, lorsqu'elles sont exécutées par le processeur, amènent le processeur à :
récupérer (202) des données d'entrée comprenant une image, du texte et des données définissant une relation entre le texte et l'image,
appliquer un ou plusieurs traitements sur les données d'entrée pour modifier au moins une relation entre le texte et l'image,
générer (208) une pluralité de modèles, des modèles individuels de la pluralité de modèles définissant la ou les modifications à la relation entre le texte et l'image,
déterminer (210) une note de lisibilité pour au moins un modèle individuel de la pluralité de modèles,
déterminer (214) si la note de lisibilité pour le ou les modèles individuels de la pluralité de modèles satisfait à un seuil, et
présenter (216) le ou les modèles individuels de la pluralité de modèles s'il est déterminé que la note de lisibilité pour le ou les modèles individuels de la pluralité de modèles satisfait à au moins un seuil,
dans lequel la détermination de la note de lisibilité associée à la transformation des données d'entrée comprend :
la détermination (252) d'une dimension d'au moins une zone définie, la dimension de la ou des zones définies représentant une parmi moins de la moitié d'une épaisseur de trait de un ou plusieurs caractères du texte et moins de la moitié d'un huitième de la hauteur d'un ou plusieurs caractères du texte,
la détermination (254) d'un niveau de luminance agrégé pour le texte sur la base de la ou des zones définies,
la détermination (254) d'un niveau de luminance agrégé pour l'image sur la base de la ou des zones définies, et
la détermination (256) d'un rapport de contrastes agrégé entre le texte et l'image sur la base du niveau de luminance agrégé pour le texte et du niveau de luminance agrégé pour l'image, la note de lisibilité pour la transformation étant fondée sur le rapport de contrastes agrégé.

6. Ordinateur selon la revendication 5, dans lequel la note de lisibilité associée à la transformation des données d'entrée est fondée sur une taille de police associée au texte.

7. Ordinateur selon la revendication 5, dans lequel l'application d'un ou plusieurs traitements sur les données d'entrée comprend l'application à l'image d'une modification de luminosité globale ou de couleur globale.
